# EUROPÄISCHE PATENTSCHRIFT

(11) **EP 2 081 942 B1**
(45) Veröffentlichungstag und Bekanntmachung des Hinweises auf die Patenterteilung: **14.12.2011**
(21) Anmeldenummer: 07818768.9
(22) Anmeldetag: 06.10.2007
(51) Int. Cl.: C07F 9/30

(54) **ETHYLENDIPHOSPHINSÄUREN**
ETHYLENE DIPHOSPHINIC ACIDS
ACIDES D'ÉTHYLÈNDIPHOSPHINIQUE

(30) Priorität: 14.10.2006 DE 102006048698
(43) Veröffentlichungstag der Anmeldung: 29.07.2009
(73) Patentinhaber: Clariant Finance (BVI) Limited, Road Town, Tortola (VG)
(72) Erfinder: BAUER, Harald, 50170 Kerpen (DE); KRAUSE, Werner, 50354 Hürth (DE); STANIEK, Peter, 79589 Binzen (DE)
(74) Vertreter: Jacobi, Carola
(86) Internationale Anmeldenummer: PCT/EP2007/008692
(87) Internationale Veröffentlichungsnummer: WO 2008/043499

(56) Entgegenhaltungen:
- EP-A- 0 061 106
- DATABASE CA [Online] CHEMICAL ABSTRACTS SERVICE, COLUMBUS, OHIO, US; GOTO, TEIJI ET AL: "Flame-retardant polyamide compositions" XP002466103 gefunden im STN Database accession no. 2004:873872 -& JP 2004 292532 A (ASAHI KASEI CHEMICAL CORPORATION, JAPAN) 21. Oktober 2004 (2004-10-21)
- DATABASE CA [Online] CHEMICAL ABSTRACTS SERVICE, COLUMBUS, OHIO, US; BRUCKMANN, JOACHIM ET AL: "Ethylenebis(phosphonic acid)" XP002466104 gefunden im STN Database accession no. 1999:369169 & ACTA CRYSTALLOGRAPHICA, SECTION C: CRYSTAL STRUCTURE COMMUNICATIONS , C55(4), 695-696 CODEN: ACSCEE; ISSN: 0108-2701, 1999,
- DATABASE CA [Online] CHEMICAL ABSTRACTS SERVICE, COLUMBUS, OHIO, US; BELLITTO, C. ET AL: "Synthesis and characterization of a new weak ferromagnet: Fe(II) ethylene-bis(phosphonates)" XP002466105 gefunden im STN Database accession no. 1999:364982 & MATERIALS RESEARCH SOCIETY SYMPOSIUM PROCEEDINGS , 547(SOLID-STATE CHEMISTRY OF INORGANIC MATERIALS II), 487-492 CODEN: MRSPDH; ISSN: 0272-9172, 1999,
- DATABASE CA [Online] CHEMICAL ABSTRACTS SERVICE, COLUMBUS, OHIO, US; PODLAHOVA, JANA ET AL: "Compounds structurally related to complexons. XX. Hydrolysis of ethylenediphosphinetetraacetate anions" XP002466106 gefunden im STN Database accession no. 1984:51700 & COLLECTION OF CZECHOSLOVAK CHEMICAL COMMUNICATIONS , 48(6), 1552-7 CODEN: CCCCAK; ISSN: 0366-547X, 1983, -& DATABASE BEILSTEIN [Online] BEILSTEIN INSTITUTE FOR ORGANIC CHEMISTRY, FRANKFURT-MAIN, DE; XP002466107 gefunden im XFIRE Database accession no. BRN 2433132
- DATABASE BEILSTEIN [Online] Beilstein Institut zur Förderung der chemischen Wissenschaft, Frankfurt am Main, DE; XP002466108 gefunden im XFIRE Database accession no. BRN 6860188 & NIFANT'EV ET AL.: J. GEN. CHEM. USSR, Bd. 56, 1986, Seiten 680-688,
- NIFANT'EV E E ET AL: "Reactions of acetylenes with hypophosphorous and phosphonous acids", JOURNAL OF GENERAL CHEMISTRY USSR, CONSULTANTS BUREAU, NEW YORK, NY, US, vol. 56, no. 4, 20 September 1986 (1986-09-20), pages 680-688, XP002165520, ISSN: 0022-1279

## Beschreibung

Die Erfindung betrifft Ethylendiphosphinsäuren, ein Verfahren zu ihrer Herstellung und ihre Verwendung.

Ethylendiphosphinsäuren sind vom Stand der Technik her grundsätzlich bekannt. So beschreiben DE-A-199 12 920 und WO-A-0 157 050 Phosphinsäuren des Typs H-P(O)(OX)-[CH₂CH₂-P(O)(OX)]ₙH mit X gleich H, Metall oder eine Alkylgruppe und n größer als 1. Diese Phosphinsäuren sind oligomer oder polymer. Sie werden durch Verfahren hergestellt, die Telomere erzeugen, die jedoch keinen Zugang zu Phosphinsäuren mit spezifischer Kettenlänge zulassen.

Es ist daher Aufgabe der vorliegenden Erfindung, Ethylendiphosphinsäuren zur Verfügung zu stellen, die jeweils eine spezifische Kettenlänge aufweisen und somit auf ihre jeweiligen Verwendungszwecke hin "maßgeschneidert" werden können.

In der DATABASE [Online] CHEMICAL ABSTRACTS SERVICE, COLUMBUS, OHIO, US; PODLAHOVA, JANA ET AL: "Compounds structurally related to complexons. XX. Hydrolysis of ethylenediphosphinetetraacetate anions" gefunden im STN Database accession no. 1984:51700 wird die Herstellung von Ethylendiphosphinsäure über Ethylendiphosphindiacetat als Zwischenprodukt beschrieben. Verbindungen der Formel (I) mit A = C R₅ R₆ OH sind im Stand der Technik bisher nicht beschrieben worden.

Gegenstand der Erfindung sind somit Ethylendiphosphinsäuren und ihre Salze der allgemeinen Formel (I)

A-P(O)(OX)-CR¹R²-CR³R⁴-P(O)(OX)-A (I)

in der A CR⁵R⁶-OH,
R¹, R², R³, R⁴, R⁵, R⁶ gleich oder verschieden sind und unabhängig voneinander H, C₁-C₂₀-Alkyl, C₆-C₂₀-Aryl und/oder C₆-C₂₀-Aralkyl und
X H, ein Alkalimetall, ein Element der zweiten Haupt- und Nebengruppe, ein Element der dritten Haupt- und Nebengruppe, ein Element der vierten Haupt- und Nebengruppe, ein Element der fünften Haupt- und Nebengruppe, ein Element der sechsten Nebengruppe, ein Element der siebten Nebengruppe, ein Element der achten Nebengruppe und/oder eine Stickstoffbase bedeuten.

Bevorzugt sind R¹, R², R³, R⁴, R⁵, R⁶ gleich oder verschieden und bedeuten, unabhängig voneinander, H, Methyl, Ethyl, n-Propyl, i-Propyl, n-Butyl, tert.-Butyl, n-Pentyl und/oder Phenyl.

Die Erfindung betrifft auch ein Verfahren (1) zur Herstellung von Ethylendiphosphinsäuren und ihren Salzen der allgemeinen Formel (I)

A-P(O)(OX)-CR¹R²-CR³R⁴-P(O)(OX)-A (I)

in der A CR⁵R⁶-OH,
R¹, R², R³, R⁴, R⁵, R⁶ gleich oder verschieden sind und unabhängig voneinander H, C₁-C₂₀-Alkyl, C₆-C₂₀-Aryl und/oder C₆-C₂₀-Aralkyl und
X H oder Alkalimetall, bedeuten, dadurch gekennzeichnet, dass man
a) ein Monophosphinsäureaddukt der Formel (II)

   H-P(O)(OX)-A (II)

   mit Acetylen oder einer Acetylenverbindung umsetzt und
b) wahlweise die erhaltenen Ethylendiphosphinsäure des Typs A-P(O)(OX)-CR¹R²-CR³R⁴-P(O)(OX)-A von Nebenprodukten abtrennt.

Die Erfindung betrifft auch ein Verfahren (2) zur Herstellung von Ethylen-Bis-(Hydroxyalkylphosphinsäure)-Salzen oder Ethylendiphosphinsäure-Salzen des Typs A-P(O)(OX)-CR¹R²-CR³R⁴-P(O)(OX)-A, worin A, R¹, R², R³, R⁴, R⁵ und R⁶ die gleiche Bedeutung wie in Anspruch 1 haben und X ein Alkalimetall, ein Element der zweiten Haupt- und Nebengruppe, ein Element der dritten Haupt- und Nebengruppe, ein Element der vierten Haupt- und Nebengruppe, ein Element der fünften Haupt- und Nebengruppe, ein Element der sechsten Nebengruppe, ein Element der siebten Nebengruppe, ein Element der achten Nebengruppe und/oder eine Stickstoffbase bedeuten, dadurch gekennzeichnet, dass eine Ethylen-Bis-(Hydroxyalkylphosphinsäure) oder Ethylendiphosphinsäure des Typs A-P(O)(OX)-CR¹R²-CR³R⁴-P(O)(OX)-A worin A, R¹, R², R³, R⁴, R⁵ und R⁶ die gleiche Bedeutung wie in Anspruch 1 haben und X H bedeutet, in einem Lösungsmittelsystem mit einem Reaktionspartner I, bei dem es sich um eine Verbindung eines Alkalimetalls, eines Elements der zweiten Haupt- und Nebengruppe, eines Elements der dritten Haupt- und Nebengruppe, eines Elements der vierten Haupt- und Nebengruppe, eines Elements der fünften Haupt- und Nebengruppe, eines Elements der sechsten Nebengruppe, eines Elements der siebten Nebengruppe, eines Elements der achten Nebengruppe und/oder eine Stickstoffbase handelt, umgesetzt wird.

Die Erfindung betrifft auch ein Verfahren (3) zur Herstellung von Ethylen-Bis-(Hydroxyalkylphosphinsäure)-Salzen oder Ethylendiphosphinsäure-Salzen des Typs

A-P(O)(OX)-CR¹R²-CR³R⁴-P(O)(OX)-A

worin A, R¹, R², R³, R⁴, R⁵ und R⁶ die gleiche Bedeutung wie in Anspruch 1 haben und X ein Element der zweiten Haupt- und Nebengruppe, ein Element der dritten Haupt- und Nebengruppe, ein Element der vierten Haupt- und Nebengruppe, ein Element der fünften Haupt- und Nebengruppe, ein Element der sechsten Nebengruppe, ein Element der siebten Nebengruppe, ein Element der achten Nebengruppe und/oder eine Stickstoffbase bedeuten, dadurch gekennzeichnet, dass eine Ethylen-Bis-(Hydroxyalkylphosphinsäure) oder Ethylendiphosphinsäure des Typs

A-P(O)(OX)-CR¹R²-CR³R⁴-P(O)(OX)-A

worin A, R¹, R², R³, R⁴, R⁵ und R⁶ die gleiche Bedeutung wie in Anspruch 1 haben und X ein Alkalimetall bedeutet, in einem Lösungsmittelsystem mit einem Reaktionspartner II zu einem anderen Metallsalz (Nicht-Alkalimetallsalz) umgesetzt wird.

Bevorzugt handelt es sich bei dem Reaktionspartner II um Borate, Carbonate, Hydroxocarbonate, Hydroxocarbonathydrate, gemischte Hydroxocarbonate, gemischte Hydroxocarbonathydrate, Phosphate, Sulfate, Sulfathydrate, Hydroxosulfathydrate, gemischte Hydroxosulfat-hydrate, Oxysulfate, Acetate, Nitrate, Fluoride, Fluoridhydrate, Chlorid, Chlorid-hydrate, Oxychloride, Bromide, Iodide, Iodidhydrate Carbonsäurederivate und/oder Alkoxide.

Die Erfindung betrifft auch die Verwendung von Ethylendiphosphinsäuren nach mindestens einem der Ansprüche 1 bis 5 als Flammschutzmittel, insbesondere Flammschutzmittel für Klarlacken und Intumeszenzbeschichtungen, Flammschutzmittel für Holz und andere cellulosehaltige Produkte, als reaktives und/oder nicht reaktives Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung.

Bevorzugt ist die Verwendung der erfindungsgemäßen Ethylendiphosphinsäure und/oder deren Salz als Binder z.B. für Gießereimassen, Formsande.

Bevorzugt ist die Verwendung der erfindungsgemäßen Ethylendiphosphinsäure und/oder deren Salz als Vernetzer bzw. Beschleuniger beim Aushärten von Epoxyharzen, Polyurethanen, ungesättigten Polyesterharzen.

Bevorzugt ist die Verwendung der erfindungsgemäßen Ethylendiphosphinsäure und/oder deren Salz als Polymerstabilisatoren, z.B. als Lichtschutzstabilisator, Radikalfänger und/oder Thermostabilisatoren für Baumwollgewebe, Polymerfasern, Kunststoffe.

Bevorzugt ist die Verwendung der erfindungsgemäßen Ethylendiphosphinsäure und/oder deren Salz als Pflanzenschutzmittel, z.B. als Pflanzenwachstumsregulator, als Herbizid, Pestizid oder Fungizid.

Bevorzugt ist die Verwendung der erfindungsgemäßen Ethylendiphosphinsäure und/oder deren Salz als Sequestrierungsmittel, z.B. zur Kontrolle von Ablagerungen in industriellen Wasserleitungssystemen, bei der Mineralölgewinnung und in Metallbehandlungsmitteln.

Bevorzugt ist die Verwendung der erfindungsgemäßen Ethylendiphosphinsäure und/oder deren Salz als Mineralöl-Additiv z.B. als Antioxidans und zur Erhöhung der Octanzahl.

Bevorzugt ist die Verwendung der erfindungsgemäßen Ethylendiphosphinsäure und/oder deren Salz als Korrosionsschutzmittel

Bevorzugt ist die Verwendung der erfindungsgemäßen Ethylendiphosphinsäure und/oder deren Salz in Wasch- und Reinigungsmittelanwendungen, z.B. als Entfärbungsmittel.

Bevorzugt ist die Verwendung der erfindungsgemäßen Ethylendiphosphinsäure und/oder deren Salz in Elektronikanwendungen z.B. in Polyelektrolyten für Kondensatoren, Batterien und Akkumulatoren, sowie als Radikalfänger in photosensitiven Schichten.

Bevorzugt ist die Verwendung der erfindungsgemäßen Ethylendiphosphinsäure und/oder deren Salz als Aldehydfänger. Überraschend wurde gefunden, dass die efindungsgemäßen Ethylendiphosphinsäuren zur Verringerung der Freisetzung von Aldehyd verwendet werden können. Bevorzugte Aldehyde sind Formaldehyd und Acetaldehyd.

Bevorzugte Verwendung finden Formaldehydfänger in Klebemassen, Formkörpern z.B. in Bauanwendungen, Automobil-, Schiff-, Luft und Raumfahrtindustrie und für die Elektrotechnik etc.

Die Erfindung betrifft auch eine flammgeschützte thermoplastische Polymerformmasse enthaltend 0,5 bis 45 Gew.-% Ethylendiphosphinsäure nach Anspruch 1 oder 2 und 0,5 bis 99,5 Gew.-% thermoplastisches Polymer oder Mischungen derselben, wobei die Summe der Komponenten 100 Gew.-% beträgt.

Die Erfindung betrifft auch eine flammgeschützte duroplastische Masse, enthaltend 0,1 bis 45 Gew.-% Ethylendiphosphinsäure nach Anspruch 1 oder 2, 40 bis 89,9 Gew.-% ungesättigte Polyester und 10 bis 60 Gew.-% Vinylmonomer, wobei die Summe der Komponenten 100 Gew.-% beträgt.

Die Erfindung betrifft auch ein flammwidrig ausgerüstetes Epoxidharz, enthaltend 0,5 bis 50 Gew.-% Ethylendiphosphinsäure nach Anspruch 1 oder 2, 5 bis 99,5 Gew.-% eines Epoxidharzes und 0 bis 20 Gew.-% eines Härters , wobei die Summe der Komponenten 100 Gew.-% beträgt.

Bevorzugt bedeutet A H und X Li, Na, K; Mg, Ca, Zn, Sr; Al, Ce, La; Ge, Sn, Pb, Ti, Zr; Sb, Bi; Cr, Mo, W; Mn; Fe, Co oder Ni.

Besonders bevorzugt bedeutet A H und X H, Na, Al, Zn, Ca, Mg, Ti oder Melamin.

Bevorzugte Ethylendiphosphinsäuren entsprechen der Formel

A-P(O)(OX)-CR¹R²-CR³R⁴-P(O)(OX)-A,

wobei R¹, R², R³, R⁴ gleich H und A gleich H ist, und, wenn X gleich H ist, resultierend in eine Ethylendiphosphinsäure der Formel

H-P(O)(OH)-CH₂-CH₂-P(O)(OH)-H;

und, wenn X gleich Alkalimetall, bevorzugt Na ist, resultierend in ein Ethylendiphosphinsäuresalz der Formel

H-P(O)(ONa)-CH₂-CH₂-P(O)(ONa)-H;

und, wenn X gleich Aluminium, d.h. Al_{1/3} ist, resultierend in ein Ethylendiphosphinsäuresalz der Formel

H-P(O)(OAl_{1/3})-CH₂-CH₂-P(O)(OAl_{1/3})-H;

und, wenn X gleich Melamin d.h. Mel ist, resultierend in ein Ethylendiphosphinsäure-melaminsalz der Formel

H-P(O)(OMel)-CH₂-CH₂-P(O)(OMel)-H.

Bevorzugte Ethylendiphosphinsäuren entsprechen auch der Formel

A-P(O)(OX)-CR¹R²-CR³R⁴-P(O)(OX)-A,

wobei R¹, R², R³, R⁴ gleich H und A gleich CR⁵R⁶-OH mit R⁵, R⁶ gleich H ist, und, wenn X gleich H ist, resultierend in eine Ethylendiphosphinsäure der Formel

HO-CH₂-P(O)(OH)-CH₂-CH₂-P(O)(OH)-CH₂-OH;

und, wenn X gleich Alkalimetall, bevorzugt Na ist, resultierend in ein Ethylendiphosphinsäuresalz der Formel

HO-CH₂-P(O)(ONa)-CH₂-CH₂-P(O)(ONa)-CH₂-OH;

und, wenn X gleich Al, d.h. Al_{1/3} ist, resultierend in ein Ethylendiphosphinsäuresalz der Formel

HO-CH₂-P(O)(OAl_{1/3})-CH₂-CH₂-P(O)(OAl_{1/3})-CH₂-OH;

und, wenn X gleich Melamin d.h. Mel ist, resultierend in ein Ethylendiphosphinsäuremelaminsalz der Formel

HO-CH₂-P(O)(OMel)-CH₂-CH₂=P(O)(OMel)-CH₂-OH.

Bevorzugte Ethylendiphosphinsäuren entsprechen auch der Formel

A-P(O)(OX)-CR¹R²-CR³R⁴-P(O)(OX)-A,

wobei R¹, R², R³, R⁴ gleich H und A gleich CR⁵R⁶-OH mit R⁵ gleich CH₃ und R⁶ gleich H ist, und, wenn X gleich H ist, resultierend in eine Ethylendiphosphinsäure der Formel

HO-CH(CH₃)-P(O)(OH)-CH₂-CH₂-P(O)(OH)-CH(CH₃)-OH;

und, wenn X gleich Alkalimetall, bevorzugt Na ist, resultierend in ein Ethylendiphosphinsäuresalz der Formel

HO-CH(CH₃)-P(O)(ONa)-CH₂-CH₂-P(O)(ONa)-CH(CH₃)-OH;

und, wenn X gleich Zink, d.h. Zn_{1/2} ist, resultierend in ein Ethylendiphosphinsäuresalz der Formel

HO-CH(CH₃)-P(O)(OZn_{1/2})-CH₂-CH₂-P(O)(OZn_{1/2})-CH(CH₃)-OH;

und, wenn X gleich Ammonium d.h. NH₄ ist, resultierend in ein Ethylendiphosphinsäureammoniumsalz der Formel

HO-CH(CH₃)-P(O)(ONH₄)-CH₂-CH₂-P(O)(ONH₄)-CH(CH₃)-OH.

Bevorzugte Ethylendiphosphinsäuren entsprechen auch der Formel

A-P(O)(OX)-CR¹R²-CR³R⁴-P(O)(OX)-A,

wobei R¹, R², R³, R⁴ gleich H und A gleich CR⁵R⁶-OH mit R⁵ gleich Phenyl und R⁶ gleich H ist, und, wenn X gleich H ist, resultierend in eine Ethylendiphosphinsäure der Formel

HO-CH(Phenyl)-P(O)(OH)-CH₂-CH₂-P(O)(OH)-CH(Phenyl)-OH;

und, wenn X gleich Alkalimetall, bevorzugt Na ist, resultierend in ein Ethylendiphosphinsäuresalz der Formel

HO-CH(Phenyl)-P(O)(ONa)-CH₂-CH₂-P(O)(ONa)-CH(Phenyl)-OH;

und, wenn X gleich Titan, d.h. Ti_{1/3} ist, resultierend in ein Ethylendiphosphinsäuresalz der Formel

HO-CH(Phenyl)-P(O)(OTi_{1/3})-CH₂-CH₂-P(O)(OTi_{1/3})-CH(Phenyl)-OH;

und, wenn X gleich Melamin d.h. Mel ist, resultierend in ein Ethylendiphosphinsäuremelaminsalz der Formel

HO-CH(Phenyl)-P(O)(Omel)-CH₂-CH₂-P(O)(Omel)-CH(Phenyl)-OH.

Bevorzugte Ethylendiphosphinsäuren entsprechen auch der Formel

A-P(O)(OX)-CR¹R²-CR³R⁴-P(O)(OX)-A,

wobei R¹, R², R³, R⁴ gleich H und A gleich CR⁵R⁶-OH mit R⁵, R⁶ gleich CH₃ ist, und, wenn X gleich H ist, resultierend in eine Ethylendiphosphinsäure der Formel

HO-C(CH₃)₂-P(O)(OH)-CH₂-CH₂-P(O)(OH)-C(CH₃)₂-OH;

und, wenn X gleich Alkalimetall, bevorzugt Na ist, resultierend in ein Ethylendiphosphinsäuresalz der Formel

HO-C(CH₃)₂-P(O)(ONa)-CH₂-CH₂-P(O)(ONa)-C(CH₃)₂-OH;

und, wenn X gleich Magnesium, d.h. Mg_{1/2} ist, resultierend in ein Ethylendiphosphinsäuresalz der Formel

HO-C(CH₃)₂-P(O)(OMg_{1/2})-CH₂-CH₂-P(O)(OMg_{1/2})-C(CH₃)₂-OH;

und, wenn X gleich Melamin d.h. Mel ist, resultierend in ein Ethylendiphosphinsäuremelaminsalz der Formel

HO-C(CH₃)₂-P(O)(Omel)-CH₂-CH₂-P(O)(Omel)-C(CH₃)₂-OH.

Bevorzugte Ethylendiphosphinsäuren entsprechen auch der Formel

A-P(O)(OX)-CR¹R²-CR³R⁴-P(O)(OX)-A

wobei R¹, R², R³, R⁴ gleich H und A gleich CR⁵R⁶-OH mit R⁵ gleich CH₃, R⁶ gleich C₂H₅ ist, und, wenn X gleich H ist, resultierend in eine Ethylendiphosphinsäure der Formel

HO-C(CH₃)(C₂H₅)-P(O)(OH)-CH₂-CH₂-P(O)(OH)-C(CH₃)(C₂H₅)-OH;

und, wenn X gleich Alkalimetall, bevorzugt Na ist, resultierend in ein Ethylendiphosphinsäuresalz der Formel

HO-C(CH₃)(C₂H₅)-P(O)(OK)-CH₂-CH₂-P(O)(OK)-C(CH₃)(C₂H₅)-OH;

und, wenn X gleich Aluminium, d.h. Al_{1/3} ist, resultierend in ein Ethylendiphosphinsäuresalz der Formel

HO-C(CH₃)(C₂H₅)-P(O)(OAl_{1/3})-CH₂-CH₂-P(O)(OA_{1/3})-C(CH₃)(C₂H₅)-OH;

und, wenn X gleich Ammonium d.h. NH₄ ist, resultierend in ein Ethylendiphosphinsäureammoniumsalz der Formel

HO-C(CH₃)(C₂H₅)-P(O)(ONH4)-CH₂-CH₂-P(O)(ONH₄)-C(CH₃)(C₂H₅)-OH.

Bevorzugte Ethylendiphosphinsäuren entsprechen auch der Formel

A-P(O)(OX)-CR¹R²-CR³R⁴-P(O)(OX)-A

wobei R¹, R², R³, R⁴ gleich H und A gleich CR⁵R⁶-OH mit R⁵ gleich CH₃, R⁶ gleich Phenyl ist, und, wenn X gleich H ist, resultierend in eine Ethylendiphosphinsäure der Formel

HO-C(CH₃)(Phenyl)-P(O)(OH)-CH₂-CH₂-P(O)(OH)-C(CH₃)(Phenyl)-OH; ,

und, wenn X gleich Alkalimetall, bevorzugt Li ist, resultierend in ein Ethylendiphosphinsäuresalz der Formel

HO-C(CH₃)(Phenyl)-P(O)(OLi)-CH₂-CH₂-P(O)(OLi)-C(CH₃)(Phenyl)-OH;

und, wenn X gleich Zink, d.h. Zn_{1/2} ist, resultierend in ein Ethylendiphosphinsäuresalz der Formel

HO-C(CH₃)(Phenyl)-P(O)(OZn_{1/2})-CH₂-CH₂-P(O)(OZn_{1/2})-C(CH₃)(Phenyl)-OH;

und, wenn X gleich Melamin d.h. Mel ist, resultierend in ein Ethylendiphosphinsäuremelaminsalz der Formel

HO-C(CH₃)(Phenyl)-P(O)(OMel)-CH₂-CH₂-P(O)(OMel)-C(CH₃)(Phenyl)-OH.

Bevorzugte Ethylendiphosphinsäuren entsprechen auch der Formel

A-P(O)(OX)-CR¹R²-CR³R⁴-P(O)(OX)-A

wobei R¹ gleich Methyl, R², R³, R⁴ gleich H und A gleich H ist, und, wenn X gleich H ist, resultierend in eine Ethylendiphosphinsäure der Formel

H-P(O)(OH)-CH(CH₃)-CH₂-P(O)(OH)-H;

und wenn X gleich Alkalimetall, bevorzugt Na ist, resultierend in ein Ethylendiphosphinsäuresalz der Formel

H-P(O)(ONa)-CH(CH₃)-CH₂-P(O)(ONa)-H;

und, wenn X gleich Al, d.h. Al_{1/3} ist, resultierend in ein Ethylendiphosphinsäuresalz der Formel

H-P(O)(OAl_{1/3})-CH(CH₃)-CH₂-P(O)(OAl_{1/3})-H;

und wenn X gleich Melamin d.h. Mel ist, resultierend in ein Ethylendiphosphinsäuremelaminsalz der Formel

H-P(O)(OMel)-CH(CH₃)-CH₂-P(O)(OMel)-H.

Bevorzugte Ethylendiphosphinsäuren entsprechen auch der Formel

A-P(O)(OX)-CR¹R²-CR³R⁴-P(O)(OX)-A

wobei R¹ gleich Methyl, R², R³, R⁴ gleich H und A gleich CR⁵R⁶-OH mit R⁵, R⁶ gleich CH₃, und, wenn X gleich H ist, resultierend in eine Ethylendiphosphinsäure der Formel

HO-C(CH₃)₂-P(O)(OH)-CH(CH₃)-CH₂-P(O)(OH)-C(CH₃)₂-OH;

und, wenn X gleich Alkalimetall, bevorzugt K ist, resultierend in ein Ethylendiphosphinsäuresalz der Formel

HO-C(CH₃)₂-P(O)(OK)-CH(CH₃)-CH₂-P(O)(OK)-C(CH₃)₂-OH;

und, wenn X gleich Magnesium, d.h. Mg_{1/2} ist, resultierend in ein Ethylendiphosphin-säuresalz der Formel

HO-C(CH₃)₂-P(O)(OMg_{1/2})-CH(CH₃)-CH₂-P(O)(OMg_{1/2})-C(CH₃)₂-OH;

und, wenn X gleich Ammonium d.h. NH₄ ist, resultierend in ein Ethylendiphosphinsäureammoniumsalz der Formel

HO-C(CH₃)₂-P(O)(ONH₄)-CH(CH₃)-CH₂-P(O)(ONH₄)-C(CH₃)₂-OH.

Bevorzugte Ethylendiphosphinsäuren entsprechen auch der Formel

A-P(O)(OX)-CR¹R²-CR³R⁴-P(O)(OX)-A

wobei R¹ gleich Phenyl, R², R³, R⁴ gleich H und A gleich H ist, und,
wenn X gleich H ist, resultierend in eine Ethylendiphosphinsäure der Formel

H-P(O)(OH)-CH(Phenyl)-CH₂-P(O)(OH)-H;

und wenn X gleich Alkalimetall, bevorzugt Na ist, resultierend in ein Ethylendiphosphinsäuresalz der Formel

H-P(O)(ONa)-CH(Phenyl)-CH₂-P(O)(ONa)-H;

und wenn X gleich Al, d.h. Al_{1/3} ist, resultierend in ein Ethylendiphosphinsäuresalz der Formel

H-P(O)(OAl_{1/3})-CH(Phenyl)-CH₂-P(O)(OAl_{1/3})-H;

und wenn X gleich Melamin d.h. Mel ist, resultierend in ein Ethylendiphosphinsäure-melaminsalz der Formel

H-P(O)(OMel)-CH(Phenyl)-CH₂-P(O)(OMel)-H.

Bevorzugte Ethylendiphosphinsäuren entsprechen auch der Formel

A-P(O)(OX)-CR¹R²-CR³R⁴-P(O)(OX)-A

wobei R¹ gleich Phenyl, R², R³, R⁴ gleich H und A gleich CR⁵R⁶-OH mit R⁵, R⁶ gleich CH₃ ist, und, wenn X gleich H ist, resultierend in eine Ethylendiphosphinsäure der Formel

HO-C(CH₃)₂-P(O)(OH)-CH(Phenyl)-CH₂-P(O)(OH)-C(CH₃)₂-OH;

und wenn X gleich Alkalimetall, bevorzugt K ist, resultierend in ein Ethylendiphosphinsäuresalz der Formel

HO-C(CH₃)₂-P(O)(OK)-CH(Phenyl)-CH₂-P(O)(OK)-C(CH₃)₂-OH;

und wenn X gleich Titan, d.h. Ti_{1/3} ist, resultierend in ein Ethylendiphosphinsäuresalz der Formel

HO-C(CH₃)₂-P(O)(OTi_{1/3})-CH(Phenyl)-CH₂-P(O)(OTi_{1/3})-C(CH₃)₂-OH;

und, wenn X gleich Ammonium d.h. NH₄ ist, resultierend in ein Ethylendiphosphinsäureammoniumsalz der Formel

HO-C(CH₃)₂-P(O)(ONH₄)-CH(Phenyl)-CH₂-P(O)(ONH₄)-C(CH₃)₂-OH.

Bevorzugte Stickstoffbasen sind Ammonium, substitutiertes Ammonium, Ethylendiamin, Hydroxylamin, Harnstoff, N-alicyclische Verbindungen wie Pyrrolidin, Piperidin, Imidazolidin, Piperazin, N-aromatische Verbindungen wie hetero-aromatische Ringverbindunggen wie Pyrrol, Pyridin, Imidazol, Pyrazin, substituierten Harnstoffderivaten, substituierten Harnstoffderivaten (z.B. Dimethylharnstoff, N,N'-Diphenylharnstoff, Benzylharnstoff, Acetylenharnstoff, Tetramethylharnstoff), Thioharnstoff, Acetylenharnstoff, Guanidin, substituierten Guanidinderivaten, (z.B. Alkylguanidin, Arylguanidin, Diphenylguanidin), Biguanid, Melamin, substituierten Melaminderivaten, (z.B. Ethylendimelamin), Kondensationsprodukte des Melamins und höher kondensierte Verbindungen davon, wie z. B. Melem, Melam oder Melon, Melamin-Phenol-Systeme, Benzoguanamin, Acetoguanamin, Urethanen, Cyanamid, Dicyandiamid, Anilin, Sulfonamid, Biuret, Allantoin, Tolyltriazol, Benzotriazol, 2-Amino-4-methylpyrimidin, Hydantoin, substituierten Hydantoinderivaten (z.B. 5,5-Diphenylhydantoin), Malonsäureamidamidin, Ethylen-bis-5-triazon, Glycinanhydrid und beliebige Mischungen davon.

Bevorzugte Alkalimetalle sind Natrium, Kalium.

Bevorzugt findet die Umsetzung des Monophosphinsäureaddukt nach Verfahren (1) mit Acetylen statt
a) in Gegenwart eines Lösungsmittels und eines Radikalinitiators,
b) indem Monophosphinsäureaddukt und Lösungsmittels vorgelegt werden und Acetylen und Initiator (wahlweise in einem Lösungsmittels) getrennt zudosiert werden,
c) indem Monophosphinsäureaddukt, Acetylen und Lösungsmittels vorgelegt werden und Initiator (wahlweise in einem Lösungsmittels) zudosiert wird,
d) indem Monophosphinsäureaddukt, Lösungsmittels und Initiator vorgelegt werden und Acetylen (wahlweise in einem Lösungsmittels) zudosiert wird,
e) indem Monophosphinsäureaddukt, Acetylen, Lösungsmittels und Initiator vorgelegt werden.

Bevorzugt ist die Abtrennung des Produktes nach Verfahren (1) durch
a) eine Fest-Flüssig-Trennung (z.B. durch Filtrieren, Zentrifugieren, Absitzen lassen)
b) eine Flüssig-Flüssig-Trennung (z.B. Extraktion etc)

Bevorzugte Addukte nach Verfahren (1) sind solche mit Aldehyden und/oder Ketonen.

Bevorzugte Aldehyde nach Verfahren (1) sind aliphatische Aldehyde (Formaldehyd, Acetaldehyd, Propionaldehyd, Butyraldehyd, Valeralehyd, Capronaldehyd, Acrolein, Crotonaldehyd, Propargylaldehyd) und/oder aromatische Aldehyde (Benzaldehyd, p-Tolylaldehyd, Anisaldehyd oder Salicylaldehyd, Vanilin).

Bevorzugte Ketone nach Verfahren (1) sind aliphatische Ketone (Aceton, Methylethylketon, Chloraceton, Methylvinylketon, Mesityloxid, Phoron oder aromatische Ketone (Acetophenon, Benzophenon).

Bevorzugte Aldehyde sind aliphatische Aldehydcarbonsäuren (Glyoxylsäure).

Bevorzugte Ketone sind aliphatische Ketocarbonsäuren (Brenztraubensäure, Acetessigsäure, Lävulinsäure).

Bevorzugte Aldehyde sind aliphatische Hydroxyaldehyde (Glycolaldehyd, Glycerinaldehyd).

Bevorzugte Aldehyde sind aliphatische Hydroxyketone (Acetol, Acetoin, Dihydroxyaceton).

Bevorzugte Aldehyde sind aliphatische Dialdehyde (Glyoxal, Malondialdehyd, Succindialdehyd).

Bevorzugte Aldehyde sind Ketoaldehyde (Methylglyoxal).

Bevorzugte Ketone sind Diketone (Diacetyl, Acetylaceton, Acetonylaceton).

Grundsätzlich sind als Radikalinitiatoren nach Verfahren (1) alle Systeme geeignet, die freie Radikale generieren. Die Addition des Olefins kann durch einen anionischen Initiator, radikalischen Initiator oder photochemisch initiiert werden.

Besonders bevorzugte Radikalinitiatoren sind Peroxo-Verbindungen wie Peroxomonoschwefelsäure, Kaliumpersulfat (Kaliumperoxomonosulfat), Caroat^{(™)}, Oxo-ne^{(™)}, Peroxodischwefelsäure, Kaliumpersulfat (Kaliumperoxodisulfat), Natrium-persulfat (Natriumperoxodisulfat), Ammoniumpersulfat (Ammoniumperoxodisulfat).

Besonders bevorzugt sind Verbindungen, die im Lösemittelsystem Peroxide bilden können wie Natriumperoxid, Natriumperoxidediperoxohydrat, Natriumperoxiddiperoxohydrathydrat, Natriumperoxidedihydrat, Natriumperoxidoctahydrat, Lithiumperoxid, Lithiumperoxidmonoperoxohydrattrihydrat, Calciumperoxid; Strontiumperoxid, Bariumperoxid, Magnesiumperoxid, Zinkperoxid, Kaliumhyperoxid, Kaliumperoxiddiperoxohydrat, Natriumperoxoboratetetrahydrat, Natriumperoxoborattrihydrat, Natriumperoxoboratmonohydrat, Wasserfreies Natrium peroxoborat, Kaliumperoxoboratperoxohydrat, Magnesiumperoxoborat, Calciumperoxoborat, Bariumperoxoborat, Strontiumperoxoborat, Kaliumperoxoborat, Peroxomonophosphorsäure, Peroxodiphosphorsäure, Kaliumperoxodiphosphat, Ammoniumperoxodiphosphat, Kaliumammoniumperoxodiphosphate (Doppelsalz), Natriumcarbonatperoxohydrat, Harnstoffperoxohydrat, Ammoniumoxalatperoxid, Bariumperoxidperoxohydrat, Bariumperoxidperoxohydrat, Calciumhydrogenperoxide, Calciumperoxidperoxohydrat, Ammoniumtriphosphatediperoxophosphathydrat, Kaliumfluoridperoxohydrat, Kaliumfluoridtriperoxohydrat, Kaliumfluoriddiperoxohydrat, Natriumpyrophosphatdiperoxohydrat, Natriumpyrophosphatdiperoxohydratoctahydrat, Kaliumacetatperoxohydrat, Natriumphosphatperoxohydrat, Natriumsilicatperoxohydrat.

Besonders bevorzugt sind Wasserstoffperoxid, Perameisensäure, Peressigsäure, Benzoylperoxid, Di-t-butylperoxid, Dicumylperoxid, 2,4-Dichlorobenzoylperoxid, Decanoylperoxid, Laurylperoxid, Cumolhydroperoxid, Pinenhydroperoxid, p-Menthanhydroperoxid, t-Butylhydroperoxid, Acetylacetoneperoxid, Methylethylketoneperoxid, Bernsteinsäureperoxid, Dicetylperoxydicarbonat, t-Butylperoxyacetat, t-Butylperoxymaleinsäure, t-Butylperoxybenzoat, Acetylcyclohexylsulfonylperoxid.

Bevorzugt werden als Radikalstarter wasserlösliche Azo-Verbindungen eingesetzt.

Weiterhin bevorzugt sind Azoinitiatoren wie 2-t-Butylazo-2-cyanopropan, Dimethylazodiisobutyrat, Azodiisobutyronitril, 2-t-Butylazo-1-cyanocyclohexan, 1-t-Amylazo-1-cyanocyclohexan. Weiterhin sind bevorzugt Alkylperketale wie 2,2-Bis-(t-butylper-oxy)butan, Ethyl-3,3-bis(t-butylperoxy)butyrat, 1,1-Di-(t-butylperoxy)-cyclohexan.

Besonders bevorzugt sind Azoinitiatoren wie ®VAZO 52, ®VAZO 64 (AIBN), ®VAZO 67, ®VAZO 88, ®VAZO 44, ®VAZO 56, ®VAZO 68 der Fa. Dupont-Biesteritz, V-70 2,2'-Azobis(4-methoxy-2,4-dimethyl valeronitril), V-65 2,2'-Azobis(2,4-dimethylvaleronitril)V-601 Dimethyl 2,2'-azobis(2'-methylpropionat),V-59 2,2'-Azobis(2-methylbutyronitril), V-40, VF-096 1,1'-Azobis(cyclohexane-1-carbonitril), V-30 1-[(cyano-1-methylethyl)azo]formamid, VAm-110 2,2'-Azobis(N-butyl-2-methylpropionamid), Am-111 2,2'-Azobis(N-cyclohexyl-2-methylpropionamid) VA-041 2,2'-Azobis[2-(5-methyl-2-imidazolin-2-yl)propan]dihydrochlorid, VA-044 2,2'-Azobis[2-(2-imidazolin-2-yl)propan] dihydrochlorid,VA-046B 2,2'-Azobis[2-(2-imidazolin-2-yl)propandisulfatedihydrate, V-50 2,2'- azobis(2-amidinopropan) hydrochlorid,VA-057 2,2'-Azobis[N-(2-carboxyethyl)-2-methylpropionamidin]tetrahydrat, VA-058 2,2'-Azobis[2-(3,4,5,6-tetrahydropyrimidin-2-yl)propan] dihydrochlorid, VA-060 2,2'-Azobis{2-[1-(2-hydroxyethyl)-2-imidazolin-2-yl]propan}dihydrochlorid, VA-061 2,2'-Azobis[2-(2-imidazolin-2-yl)propan], VA-080 2,2'-Azobis{2-methyl-N-[1,1-bis(hydroxymethyl)-2-hydroxyethyl] propionamid, VA-085 2,2'-Azobis{2-methyl-N-[2-(1-hydroxybuthyl)]propionamid, VA-086 2,2'-Azobis[2-methyl-N-(2-hydroxyethyl)propionamid] von Wako Chemicals.

Für die Herstellung nach Verfahren (1) kann ein Lösungsmittel eingesetzt werden. Erfindungsgemäße Lösungsmittel sind bevorzugt Wasser, Alkohole, wie z.B. Methanol, Ethanol, Iso-Propanol, n-Propanol, n-Butanol, Iso-Butanol, t-Butanol, n-Amylalkohol, Iso-Amylalkohol, t-Amylalkohol, n-Hexanol, n-Octanol, Iso-Octanol, n-Tridecanol, Benzylalkohol etc. Bevorzugt sind weiterhin Glycole wie z.B. Ethylenglycol, 1,2-Propandiol, 1,3-Propandiol, 1,3- Butandiol, 1,4-Butandiol, Diethylenglycol etc.; aliphatische Kohlenwasserstoffe wie Pentan, Hexan, Heptan, Octan, und Petrolether, Petroleumbenzin, Kerosin, Petroleum, Paraffinöl etc.; Aromatische Kohlenwasserstoffe wie Benzol, Toluol, Xylol, Mesitylen, Ethylbenzol, Diethylbenzol etc.; Halogenkohlenwasserstoffe wie Methylenchlorid, Chloroform, 1,2-Dichloroethan, Chlorobenzol, Tetrachlorkohlenstoff, Tetrabromoethylen etc.; Alicyclische Kohlenwasserstoffe wie Cyclopentan, Cyclohexan, und Methylcyclohexan etc.; Ether wie Anisol (Methyl phenyl ether), t-Butylmethylether, Dibenzylether, Diethylether, Dioxan, Diphenylether, Methylvinylether, Tetrahydrofuran, Triisopropylether etc.; Glycolether wie Diethylenglycoldiethylether, Diethylenglycoldimethylether (Diglyme), Diethylenglycolmonobutylether, Diethylenglycolmonomethylether, 1,2-Dimethoxyethan (DME Monoglyme), Ethylenglycolmonobutylether, Triethylenglycoldimethylether (Triglyme), Triethylenglycolmonomethylether etc.; Ketone wie Aceton, Diisobutylketon, Methyl-n-propylketon; Methylethylketon, Methyl-iso-butylketon etc; Ester wie Methylformat, Methylacetat, Ethylacetat, n-Propylacetat und n-Butylacetat etc.; Carbonsäuren wie Ameisensäure, Essigsäure, Propionsäure, Buttersäure etc. Eine oder mehrere dieser Verbindungen können allein oder in Kombination eingesetzt werden.

Erfindungsgemäß bevorzugt ist nach Verfahren (1) ein Verhältnis von Lösungsmittel zu Monophosphinsäureaddukt von 100 zu 1 bis 1 zu 100, besonders bevorzugt 10 zu 1 bis 1 zu 10 Gew.-Teilen.

Erfindungsgemäß bevorzugt ist nach Verfahren (1) ein Verhältnis von Initiator zu Monophosphinsäureaddukt von 1 zu 1 bis 1 zu 1000, besonders bevorzugt 1 zu 2 bis 1 zu 100 mol/mol.

Erfindungsgemäß bevorzugt ist nach Verfahren (1) ein Verhältnis von Acetylen zu Monophosphinsäureaddukt von 100 zu 1 bis 1 zu 100, besonders bevorzugt 5 zu 1 bis 1 zu 5 mol/mol.

Erfindungsgemäß bevorzugt ist nach Verfahren (1) eine Reaktionszeit von 0,1 bis 100 h, besonders bevorzugt 1 bis 10 h.

Erfindungsgemäß bevorzugt ist die Phosphinsäure des Typs HO-CR⁵R⁶-P(O)(OX)- CR¹R²-CR³R⁴-P(O)(OX)- CR⁵R⁶OH zu reinigen.

Bevorzugtes Reinigungsverfahren nach Verfahren (1) ist
a) Umkristallisierung aus einem erfindungsgemäßen Lösungsmittel und Abtrennung
b) Diggerieren mit einem erfindungsgemäßen Lösungsmittel und Abtrennung.

Bevorzugtes Verhältnis von Lösungsmittel zu Phosphinsäure des Typs HO- CR⁵R⁶-P(O)(OX)- CR¹R²-CR³R⁴-P(O)(OX)- CR⁵R⁶OH für das bevorzugte Reinigungsverfahren nach Verfahren (1) ist 1.000 zu 1 bis 4 zu 1, besonders bevorzugt 100 zu 1 bis 1 zu 1

Bevorzugte Temperatur für den Reinigungsprozess nach Verfahren (1) ist 20 bis 200 C, besonders bevorzugt 50 bis 150 °C.

Bevorzugter Druck für den Reinigungsprozess nach Verfahren (1) ist 10 bis 100.000.000 Pa.

Bevorzugt ist eine Reinheit nach Verfahren (1) von größer als 90 %, besonders bevorzugt größer als 95 %.

Die Erfindung betrifft auch Verfahren zur Herstellung der Ethylen-Bis-(Hydroxyalkyl-phosphinsäure)-Salze und der Ethylendiphosphinsäuresalze, bei dem die Säuren zu Aluminium-Salzen bzw. die Alkalisalze zu Aluminiumsalzen umgewandelt werden.

Erfindungsgemäß bevorzugt ist ein Verfahren (2) bei dem eine erfindungsgemäße Ethylen-Bis-(Hydroxyalkylphosphinsäure) oder Ethylendiphosphinsäure mit X gleich H in einem geeigneten Lösungsmittelsystem mit einem Reaktionspartner A umgesetzt wird.

Bevorzugt kann in einem Verfahren (3) das erfindungsgemäße Salz der erfindungsgemäßen Ethylen-Bis-(Hydroxyalkylphosphinsäure) oder Ethylendiphosphinsäure mit X gleich Alkalimetall in geeigneten Lösungsmittel durch Zugabe einer anderen Komponente B in eine anderes Metallsalz umgewandelt werden.

Bevorzugt erfolgt die Umsetzung der erfindungsgemäßen Phosphinsäure mit Komponente A nach Verfahren (2) bei einem Feststoffgehalt der Salze von erfindungsgemäßen Phosphinsäuren von 0,1 bis 70 Gew.-%, bevorzugt 5 bis 40 Gew.-%.

Die Reaktion nach Verfahren (2) erfolgt bevorzugt bei einer Temperatur von -20 bis +500 °C, besonders bevorzugt 70 bis 160 °C.

Bevorzugt beträgt das Verhältnis von Komponente A zu Phosphor (der erfindungsgemäßen Phosphinsäure) nach Verfahren (2) 0,8 bis 3 lonenequivalent (mol pro Ladung des Kations) besonders bevorzugt 1 bis 2.

Bevorzugt beträgt das Verhältnis von Lösungsmittel zu Phosphor (der erfindungsgemäßen Phosphinsäure) nach Verfahren (2) 2 bis 1.000 mol/mol, besonders bevorzugt 4 bis 100 mol/mol.

Erfindungsgemäß bevorzugtes Lösungsmittelsystem nach Verfahren (2) besitzt eine Dissoziationskonstante pKa von 10 bis 30.

Erfindungsgemäß bevorzugte Komponente A nach Verfahren (2) ist ein Salz eines Elementes der ersten Hauptgruppe, bevorzugt ein Alkalimetallhydroxid, Alkalimetalloxidhydroxid, Alkalimetallhydroxidcarbonat, Alkalimetallalkoholat, besonders bevorzugt Lithiumhydroxid, Natriumhydroxid, Kaliumhydroxid, Natriummethylat, Natriumethylat, Natrium-n-propylat, Natrium-i-propylat, Natrium-n-butylat, Natrium-i-butylat, Natrium-tert-butylat, Natriumamylat, Natriumglycolat.

Erfindungsgemäß bevorzugte Komponente A nach Verfahren (2) ist ein Salz eines Elementes der ersten Hauptgruppe, bevorzugt ein Element der zweiten Haupt- und Nebengruppe, bevorzugt Erdalkalimetallhydroxid, Erdalkalimetalloxidhydroxid, Erdalkalimetallmetallhydroxidcarbonat, besonders bevorzugt Magnesiumhydroxid (®Magnifin H5, Albermarle), Hydrotalcite (Mg₆Al₂(OH)₁₆CO₃ * nH₂O), Dihydrotalcit, Magnesium-Carbonate oder Magnesium-Calcium-Carbonate, Calciumhydroxid, basisches Zinkcarbonat, Zinkhydroxidcarbonat, basisches Zinkcarbonathydrat, Zinkhydroxide oder gemischte Zinkoxidhydroxide (Standard-Zinkoxid, z.B. von Grillo, aktiviertes Zinkoxid z.B. von Rheinchemie, Zincit, Calamin), -hydroxystannat,

Erfindungsgemäß bevorzugte Komponente A nach Verfahren (2) ist ein Salz eines Element der dritten Haupt- und Nebengruppe, bevorzugt Aluminiumhydroxid, Cerhydroxid, Lanthan-hydroxid, Aluminiumalkoholat, Ceralkoholat, Lanthanalkoholat, Aluminiumhydroxid oder gemischtes Aluminiumoxidhydroxid, Dihydroxyaluminium-natriumcarbonat, NaAl(OH)₂CO₃ und/oder Polyaluminiumhydroxy-Verbindungen, die vorzugsweise einen Aluminiumgehalt von 9 bis 40 Gew.-% besitzen.

Erfindungsgemäß bevorzugte Komponente A nach Verfahren (2) ist ein Salz eines Element der vierten Haupt- und Nebengruppe, bevorzugt Zinnhydroxide, Bleihydroxide, Titanoxid-hydroxide Zirkonoxidhydroxide, Zinnalkoholate, Titanalkoholate, Zirkonalkoholate.

Erfindungsgemäß bevorzugte Titanalkoholate d.h. Titan-Alkoxide sind Titan-(IV)-n-propoxid (®Tilcom NPT, ®Vertec NPT), Titan-(IV)-n-butoxid, Titanchloridtriisoprop-oxid, Titan-(IV)-ethoxid, Titan-(IV)-2-ethylhexyloxid (®Tilcom EHT, ®Vertetec EHT).

Erfindungsgemäß bevorzugte Zinnalkoholate (Zinn-Alkoxid) ist Zinn-(IV)-tert-butoxid.

Erfindungsgemäß bevorzugte Zirkonalkoholate d.h. Zirkonium-Alkoxid sind Zirkon-(IV)-tert-butoxid.

Erfindungsgemäß bevorzugte Komponente B nach Verfahren (3) sind Borate, Carbonate, Hydroxocar-bonate, Hydroxocarbonathydrate, gemischte Hydroxocarbonate, gemischte Hydroxo-carbonathydrate, Phosphate, Sulfate, Sulfat hydrate, Hydroxosulfathydrate, gemischte Hydroxosulfathydrate, Oxysulfate, Acetate, Nitrate, Fluoride, Fluoridhydrate, Chlorid, Chloridhydrate, Oxychloride, Bromide, Iodide, Iodidhydrate, Carbonsäurederivate und/oder Alkoxide eines Elementes der ersten Hauptgruppe, der zweiten Haupt- und Nebengruppe - bevorzugt Mg, Ca, Zn - der dritten Haupt- und Nebengruppe - bevorzugt Al, Ce, La.

Erfindungsgemäß bevorzugte Komponenten B nach Verfahren (3) sind Aluminiumchlorid, Aluminiumnitrat, Aluminiumsulfat, Titanylsulfat, Zinknitrat, Zinksulfat und/oder Zinkchlorid.

Bevorzugt erfolgt die Umsetzung nach Verfahren (3) in einem Rührkessel, Mischer und/oder Kneter.

Bevorzugt erfolgt die Umsetzung nach Verfahren (3) mit einem Energieeintrag von 0,083 bis 1,65 kW/m3, besonders bevorzugt 0,33 - 1,65 kW/m³.

Bevorzugt werden die Salze von erfindungsgemäßen Phosphinsäuren nach Verfahren (3) durch Filtrieren und/oder Zentrifugieren aus dem Reaktionsgemisch abgetrennt.

Bevorzugt werden die Salze von erfindungsgemäßen Phosphinsäuren nach Verfahren (3) mit Druck-Filternutschen, Vakuum-Filternutschen, Rührwerksfilternutschen, Druck-Kerzenfilter, Axial-Blattfilter, Kreis-Blattfilter, Zentrifugal-Scheibenfilter, Kammer-/ Rahmenfilterpressen, Automatische Kammerfilterpressen, Vakuum-Trommelzellenfilter, Vakuum-Scheibenzellenfilter, Vakuum-Innenzellenfilter, Vakuum-Planzellenfilter, Rotations-Druckfilter, Vakuum-Bandfilter abgetrennt.

Bevorzugt beträgt der Filtrationsdruck nach Verfahren (3) 0,5 Pa bis 6 MPa.

Bevorzugt beträgt die Filtrationstemperatur nach Verfahren (3) 0 bis 400 °C.

Bevorzugt beträgt die spezifische Filterleistung nach Verfahren (3) 10 bis 200 kg*h^{-1*m-2}.

Bevorzugt beträgt die Restfeuchte des Filterkuchens nach Verfahren (3) 5 bis 60%.

Bevorzugt werden die Salze nach Verfahren (3) von erfindungsgemäßen Ethylen-Bis-(Hydroxyalkylphosphinsäure) oder Ethylendiphosphinsäure mit Vollmantelzentrifugen wie Überlauf-Zentrifugen, Schäl-Zentrifugen, Kammer-Zentrifugen, Schneckenaustrags-Zentrifugen, Teller-Zentrifugen, Rohr-Zentrifugen, Siebzentrifugen wie Hänge- und Pendel-Zentrifugen, Siebschnecken-Zentrifugen, Siebschäl-Zentrifugen oder Schub-Zentrifugen abgetrennt.

Bevorzugt beträgt das Beschleunigungsverhältnis nach Verfahren (3) 300 bis 15.000.

Bevorzugt beträgt die Suspensionsdurchsatzleistung nach Verfahren (3) 2 bis 400 m3*h-1.

Bevorzugt beträgt die Feststoffdurchsatzleistung nach Verfahren (3) 5 bis 80 t*h-1.

Bevorzugt beträgt die Restfeuchte des Kuchens nach Verfahren (3) 5 bis 60 %.

Bevorzugt werden nach Verfahren (3) die Salze von erfindungsgemäßen Phosphinsäuren getrocknet.

Erfindungsgemäße Aggregate für die Trocknung nach Verfahren (3) sind Kammertrockner, Kanaltrockner, Bandtrockner (Luftgeschwindigkeit 2 - 3 m/s), Tellertrockner (Temperatur 20 bis 400°C), Trommeltrockner (100 - 250 °C Heißgastemperatur), Schaufeltrockner (50 - 300 °C Temperatur), Stromtrockner (10 - 60 m/s Luftgeschwindigkeit, 50 - 300 °C Abluft-Temperatur), Fließbetttrockner (0,2 - 0,5 m/s Luftgeschwindigkeit, 50 - 300 °C Abluft-Temperatur, Walzentrockner, Röhrentrockner 20 bis 200 °C Temperatur, Schaufeltrockner, Vakuumtrockenschränke (20 bis 300 °C Temperatur, 0,001 - 0,016 MPa Druck), Vakuumwalzentrockner (20 bis 300 °C Temperatur, 0,004 - 0,014 MPa Druck, Vakuumschaufeltrockner (20 bis 300 °C Temperatur, 0,003 - 0,02 MPa Druck), Vakuumkonustrockner (20 bis 300 °C Temperatur, 0,003 - 0,02 MPa Druck).

Erfindungsgemäß ist ein Verfahren (4) zur Bildung von erfindungsgemäßer Ethylendiphosphinsäure des Typs H-P(O)(OH)-CR¹R²-CR³R⁴-P(O)(OH)-H aus erfindungsgemäßer Ethylen-Bis-(Hydroxyalkylphosphinsäure) des Typs HO-CR⁵R⁶-P(O)(OX)-CR¹R²-CR³R⁴-P(O)(OX)-CR⁵R⁶OH.

Eine erfindungsgemäße Ausgestaltung' des Verfahrens (4) ist die erfindungsgemäßer Ethylen-Bis-(Hydroxyalkylphosphinsäure) des Typs HO-CR⁵R⁶-P(O)(OX)-CR¹R²-CR³R⁴-P(O)(OX)-CR⁵R⁶OH zu erhitzen.

Bevorzugte Temperatur für den Bildungsprozess nach Verfahren (4) ist 20 bis 300 °C, besonders bevorzugt 50 bis 200 °C.

Bevorzugter Druck für den Bildungsprozess nach Verfahren (4) ist 10 bis 100.000.000 Pa.

Bevorzugt nach Verfahren (4) ist ein Verhältnis von Protonensäure zu erfindungsgemäßer Ethylen-Bis-(Hydroxyalkylphosphinsäure) des Typs HO-CR⁵R⁶-P(O)(OX)-CR¹R²-CR³R⁴-P(O)(OX)-CR⁵R⁶OH von100 zu 1 bis 1 zu 100, besonders bevorzugt 10 zu 1 bis 1 zu 10 mol/mol.

Bevorzugt wird nach Verfahren (4) die Protonensäure entfernt. Die Entfernung erfolgt bevorzugt durch Abdestillieren, Extrahieren und/oder auskristallisieren.

Bevorzugte Temperatur für die Abtrennung der Protonensäure nach Verfahren (4) ist 20 bis 300 °C, besonders bevorzugt 50 bis 200 °C.

Bevorzugter Druck für die Abtrennung der Protonensäure nach Verfahren (4) ist 10 bis 10⁸ Pa.

Erfingdungsgemäß bevorzugt ist nach Verfahren (4) die Erwärmung in Gegenwart eines Lösungsmittels durchzuführen.

Bevorzugte Temperatur für die Abtrennung des Lösungsmittels nach Verfahren (4) ist 20 bis 300°C, besonders bevorzugt 50 bis 200 °C.

Bevorzugter Druck für die Abtrennung der Lösungsmittels nach Verfahren (4) ist 10 bis 10⁸ Pa.

Bevorzugt wird die erfindungsgemäße Ethylen-Bis-(Hydroxyalkylphosphinsäure) zur Herstellung der Ethlyendiphosphonsäure unter Abspaltung der Endgruppen (dies ist möglich als Säuren/Alkalisalze/Al-Salze etc.) eingesetzt.

Dabei ist die Verwendung der erfindungsgemäßen Phosphinsäure und/oder deren Salz des Typs

A-P(O)(OX)- CR¹R²-CR³R⁴-P(O)(OX)-A

und ihren Derivaten mit R¹, R², R³, R⁴ gleich H, C₁-C₂₀-Alkyl, Aryl (bevorzugt Phenyl), und/oder Aralkyl A gleich CR¹R²OH X gleich H, Alkalimetall, Al, Zn, Ca, Mg, Ti, Stickstoffbase (bevorzugt NH₄, Ethylendiamin, Melamin etc) zur Herstellung der erfindungsgemäßen Phosphinsäure und/oder deren Salz des Typs

A-P(O)(OX)- CR¹R²-CR³R⁴-P(O)(OX)-A

und ihren Derivaten mit R¹, R², R³, R⁴ gleich H, C₁-C₂₀-Alkyl, Aryl (bevorzugt Phenyl), und/oder Aralkyl A gleich H, X gleich H, Alkalimetall, Al, Zn, Ca, Mg, Ti, Stickstoffbase (bevorzugt NH₄, Ethylendiamin, Melamin etc) bevorzugt.

Bevorzugt ist die Verwendung der erfindungsgemäßen Phosphinsäure und/oder deren Salz zur Herstellung von flammgeschützten Polymerformmassen. Bevorzugt enthält die flammgeschützte Polymerformmasse 0,5 bis 45 Gew.-% erfindungsgemäße Phosphinsäure und/oder deren Salz, 0,5 bis 95 Gew.-% Polymer oder Mischungen derselben 0,5 bis 55 Gew.-% Additive 0,5 bis 55 Gew.-% Füllstoff bzw. Verstärkungsmaterialien, wobei die Summe der Komponenten 100 Gew.-% beträgt.

Bevorzugt enthält die flammgeschützte Polymerformmasse 10 bis 40 Gew.-% erfindungsgemäße Phosphinsäure und/oder deren Salz, 10 bis 80 Gew.-% Polymer oder Mischungen derselben 2 bis 40 Gew.-% Additive 2 bis 40 Gew.-% Füllstoff bzw. Verstärkungsmaterialien, wobei die Summe der Komponenten 100 Gew.-% beträgt.

Ein Verfahren zur Herstellung von flammgeschützten Polymerformmassen, ist dadurch gekennzeichnet, dass die erfindungsgemäße Phosphinsäure und/oder deren Salz mit dem Polymergranulat und evtl. Additiven vermischt und auf einem Doppelschnecken-Extruder (ZSK 25 WLE, 14,5 kg/h, 200 U/min, L/D: 4) bei Temperaturen von 170 °C (Polystyrol), ca. 270 °C (PET, Polyethylenterephthalat), 230 bis 260 °C (Polybutylenterephthalat, PBT), von 260 °C (PA6) bzw. von 260 bis 280 °C (PA 66) eingearbeitet wird. Der homogenisierte Polymerstrang wird abgezogen, im Wasserbad gekühlt, anschließend granuliert und auf einen Restfeuchtegehalt von 0,05 bis 5 %, bevorzugt 0,1 bis 1 Gew.-%, getrocknet.

Ein Verfahren zur Herstellung einer flammgeschützten Polymerformmasse, ist dadurch gekennzeichnet, dass 1000 Gewichtsteile Dimethylterephthalat und 720 Gewichtsteile Ethylenglykol und 35 bis 700 Gewichtsteile erfindungsgemäßer Phosphinsäure polymerisiert werden. Wahlweise kann die Polymerisation in Gegenwart von Zinkacetat erfolgen. Wahlweise kann die flammgeschützte Polymerformmasse zu Fasern gesponnen werden.

Bevorzugt handelt es sich bei dem Polymer um ein thermoplastisches oder duroplastisches Polymer.

Bevorzugt handelt es sich bei den thermoplastischen Polymeren um Polymere von Mono- und Diolefinen, beispielsweise Polypropylen, Polyisobutylen, Polybuten-1, Poly-4-methylpenten-1, Polyisopren oder Polybutadien sowie Polymerisate von Cycloolefinen wie z.B. von Cyclopenten oder Norbornen; ferner Polyethylen (das ggf. vernetzt sein kann), z.B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE), sowie Mischungen davon.

Bevorzugt handelt es sich bei den thermoplastischen Polymeren um Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere und deren Copolymere mit Kohlenstoffmonoxid, oder Ethylen-Acrylsäure-Copolymere und deren Salze (lonomere), sowie Terpolymere von Ethylen mit Propylen und einem Dien, wie Hexadien, Dicyclopentadien oder Ethylidennorbornen; ferner Mischungen solcher Copolymere untereinander, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere; LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z.B. Polyamiden.

Bevorzugt handelt es sich bei den Polymeren um Kohlenwasserstoffharze (z.B. C₅-C₉) inklusive hydrierte Modifikationen davon (z.B. Klebrigmacherharze) und Mischungen von Polyalkylenen und Stärke.

Bevorzugt handelt es sich bei den thermoplastischen Polymeren um Polystyrol, Poly-(p-methylstyrol) und/oder Poly-(alpha-methylstyrol).

Bevorzugt handelt es sich bei den thermoplastischen Polymeren um Copolymere von Styrol oder alpha-Methylstyrol mit Dienen oder Acrylderivaten, wie z.B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den thermoplastischen Polymeren um Pfropfcopolymere von Styrol oder alpha-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z.B. als so genannte ABS-, MBS-, ASA- oder AES-Polymere bekannt sind.

Bevorzugt handelt es sich bei den thermoplastischen Polymeren um halogenhaltige Polymere, wie z.B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

Bevorzugt handelt es sich bei den thermoplastischen Polymeren um Polymere, die sich von alpha, beta-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile und Copolymere der genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

Bevorzugt handelt es sich bei den thermoplastischen Polymeren um Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit Olefinen.

Bevorzugt handelt es sich bei den thermoplastischen Polymeren um Homo- und Copolymere von cyclischen Ethern, wie Polyalkylenglykole, Polyethylenoxyd, Polypropylenoxyd oder deren Copolymere mit Bisglycidylethern.

Bevorzugt handelt es sich bei den Polymeren um thermoplastischen Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.

Bevorzugt handelt es sich bei den thermoplastischen Polymeren um Polyphenylenoxide und -sulfide und deren Mischungen mit Styrolpolymeren oder Polyamiden.

Bevorzugt handelt es sich bei den thermoplastischen Polymeren um Polyurethane, die sich von Polyethern, Polyestern und Polybutadienen mit endständigen Hydroxylgruppen einerseits und aliphatischen oder aromatischen Polyisocyanaten andrerseits ableiten, sowie deren Vorprodukte.

Bevorzugt handelt es sich bei den thermoplastischen Polymeren um Polyamide und Copolyamide, die sich von Diaminen und Dicarbonsäuren und/oder von Aminocarbonsäuren oder den entsprechenden Lactamen ableiten, wie Polyamid 4, Polyamid 6 (®Akulon K122, DSM; ®Zytel 7301, Fa. DuPont; ®Durethan B 29, Fa. Bayer), Polyamid 6/6 (®Zytel 101, Fa. DuPont; ®Durethan A30, ®Durethan AKV, ®Durethan AM, Fa. Bayer; ®Ultramid A3, Fa BASF) 6/10, 6/9, 6/12, 4/6, 12/12, Polyamid 11, Polyamid 12 (®Grillamid L20, Fa. Ems Chemie), aromatische Polyamide ausgehend von m-Xylol, Diamin und Adipinsäure; Polyamide, hergestellt aus Hexamethylendiamin und Iso- und / oder Terephthalsäure und gegebenenfalls einem Elastomer als Modifikator, z.B. Poly-2,4,4-trimethylhexamethylentere-phthalamid oder Poly-m-phenylenisophthalamid. Blockcopolymere der vorstehend genannten Polyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Bevorzugt handelt es sich bei den Polymeren um Polyharnstoffe, Polyimide, Polyamidimide, Polyetherimide, Polyesterimide, Polyhydantoine und Polybenzimidazole.

Bevorzugt handelt es sich bei den thermoplastischen Polymeren um Polyester, die sich von Dicarbonsäuren und Dialkoholen und/oder von Hydroxycarbonsäuren oder den entsprechenden Lactonen ableiten, wie Polyethylenterephthalat, Polybutylenterephthalat (®Celanex 2500, ®Celanex 2002, Fa Celanese; ®Ultradur, Fa. BASF), Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten, oder MBS modifizierte Polyester.

Bevorzugt handelt es sich bei den thermoplastischen Polymeren um Polycarbonate und Polyestercarbonate, um Polysulfone, Polyethersulfone und Polyetherketone.

Bevorzugt handelt es sich bei den Polymeren um Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO, PBT/PC/ABS oder PBT/PET/PC.

Bevorzugt ist die Verwendung der erfindungsgemäßen Phosphinsäure und/oder deren Salz zur Herstellung von flammgeschützten Polymer-Formkörpern, -Filmen, -Fäden und -Fasern.

Bevorzugt enthalten die flammgeschützten Polymer-Formkörper, -Filme, -Fäden und -Fasern 0,5 bis 45 Gew.-% erfindungsgemäße Phosphinsäure und/oder deren Salz, 0,5 bis 95 Gew.-% thermoplastisches Polymer oder Mischungen derselben.

Bevorzugt enthalten die flammgeschützten Polymer-Formkörper, -Filme, -Fäden und -Fasern 0,5 bis 45 Gew.-% erfindungsgemäße Phosphinsäure und/oder deren Salz, 0,5 bis 95 Gew.-% thermoplastisches Polymer oder Mischungen derselben 0,5 bis 55 Gew.-% Additive 0,5 bis 55 Gew.-% Füllstoff bzw. Verstärkungsmaterialien.

Die Erfindung betrifft schließlich auch ein Verfahren zur Herstellung von flammgeschützten Polymer-Formkörpern, dadurch gekennzeichnet, dass erfindungsgemäße flammgeschützte Polymer-Formmassen durch Spritzgießen (z.B. Spritzgießmaschine (Typ Aarburg Allrounder) und Pressen, Schaumspritzgießen, Gasinnendruck-Spritzgießen, Blasformen; Foliengießen, Kalandern, Laminieren oder Beschichten bei höheren Temperaturen zum flammgeschützten Polymer-Formkörper verarbeitet wird.

Das Verfahren zur Herstellung von flammgeschützten Polymer-Formkörpern, ist dadurch gekennzeichnet, dass die erfindungsgemäße flammgeschützte Formmasse auf einer bei erfindungsgemäßen Massetemperaturen zu Polymer-Formkörpern verarbeitet wird.

Erfindungsgemäß bevorzugte Massetemperaturen sind bei Polystyrol 200 bis 250 °C, bei Polypropylen 200 bis 300°C, bei Polyethylenterephthalat (PET) 250 bis 290 °C, bei Polybutylenterephthalat (PBT) 230 bis 270 °C, bei Polyamid 6 (PA 6) 260 bis 290 °C, bei Polyamid 6.6 (PA 6.6) 6.6 260 bis 290 °C und bei Polycarbonat 280 bis 320 °C.

Eine erfindungsgemäße flammwidrige duroplastische Masse besteht aus 0,1 bis 45 Gew. -% erfindungsgemäße Phosphinsäure 40 bis 90 Gew. -% ungesättigtem Polyester 10 bis 60 Gew. -% Vinylmonomer

Bevorzugt handelt es sich bei den duroplastischen Polymeren um ungesättigte Polyesterharze, die sich von Copolyestern gesättigter und ungesättigter Dicarbonsäuren oder deren Anhydriden mit mehrwertigen Alkoholen, sowie Vinylverbindungen als Vernetzungsmittel ableiten. UP-Harze werden gehärtet durch radikalische Polymerisation mit Initiatoren (z.B. Peroxiden) und Beschleunigern.

Bevorzugte ungesättigte Dicarbonsäuren und -derivate zur Herstellung der Polyester sind Maleinsäureanhydrid und Fumarsäure.

Bevorzugte gesättigte Dicarbonsäuren sind Phthalsäure Isophthalsäure, Terephthalsäure, Tetrahydrophthalsäure, Adipinsäure.

Bevorzugte Diole sind 1,2-Propandiol, Ethylenglycol, Diethylenglycol und Neopentylglycol, Neopentylglycol, ethoxyliertes oder propoxyliertes Bisphenol A. Bevorzugte Vinylverbindung zur Vernetzung ist Styrol.

Bevorzugte Härtersysteme sind Peroxide und Metallcoinitiatoren z.B. Hydroperoxide und Cobaltoctanoat und/oder Benzoylperoxid und Aromatische Amine und/oder UV-Licht und Photosensibilisatoren z.B. Benzoinether.

Bevorzugte Hydroperoxide sind Di-tert.-butylperoxid, tert.-Butylperoctoat, tert.-Butylperpivalat, tert.-Butylper-2-ethylhexanoat, tert.-Butylpermaleinat, tert.-Butylperisobutyrat, Benzoylperoxid, Diacetylperoxid, Succinylperoxid, p-Chlorbenzoylperoxid oder Dicyclohexylperoxiddicarbonat.

Bevorzugt werden Initiatoren in Mengen von 0,1 bis 20 Gew. -%, vorzugsweise 0,2 bis 15 Gew.-%, berechnet auf die Masse aller Comonomeren, eingesetzt.

Bevorzugte Metallcoinitiatoren sind Kobalt-, Mangan-, Eisen-, Vanadium -, Nickel- oder Bleiverbindungen. Bevorzugt werden Metallcoinitiatoren in Mengen von 0,05 bis 1 Gew.-% berechnet auf die Masse aller Comonomeren, eingesetzt.

Bevorzugte aromatische Amine sind Dimethylanilin, Dimethyl-p-toluol, Diethylanilin, Phenyldiethanolamine.

Ein Verfahren zur Herstellung von flammgeschützten Copolymerisaten wird so ausgeführt, dass man (A) mindestens ein ethylenisch ungesättigtes Dicarbonsäureanhydrid, abgeleitet von mindestens einer C₄-C₈-Dicarbonsäure, (B) mindestens eine vinylaromatische Verbindung und (C) Polyol copolymerisiert, und dann (D) mit erfindungsgemäßer Phosphinsäure umsetzt.

Ein Verfahren zur Herstellung von flammwidrigen duroplastischen Massen wird so ausgeführt, dass man ein duroplastisches Harz mit einer Flammschutzkomponente aus erfindungsgemäßer Phosphinsäure vermischt und die resultierende Mischung bei Drücken von 3 bis 10 bar und Temperaturen von 20 bis 60 °C nass presst (Kaltpressung).

Ein anderes Verfahren zur Herstellung von flammwidrigen duroplastischen Massen wird so ausgeführt, dass man ein duroplastisches Harz mit erfindungsgemäßer Phosphinsäure vermischt und die resultierende Mischung bei Drücken von 3 bis 10 bar und Temperaturen von 80 bis 150 °C nass presst (Warm- oder Heißpressung).

Bevorzugt handelt es sich bei den Polymeren um vernetzte Epoxidharze, die sich von aliphatischen, cycloaliphatischen, heterocyclischen oder aromatischen Glycidylverbindungen ableiten, z.B. Produkte von Bisphenol-A-diglycidylethern, Bisphenol-F-di-glycidylethern, die mittels üblichen Härtern und/ oder Beschleunigern vernetzt werden.

Erfindungsgemäß einsetzbare Glycidylverbindungen sind Bisphenol-A-diglycidylester, Bisphenol-F-diglycidylester, Polyglycidylester von Phenol-Formaldehydharzen und Kresol-Formaldehydharzen, Polyglycidylester von Pththal-, Isophthal- und Terephthalsäure sowie von Trimellithsäure, N-Glycidylverbindungen von aromatischen Aminen und heterocyclischen Stickstoffbasen sowie Di- und Polyglycidylverbindungen von mehrwertigen aliphatischen Alkoholen verwendet.

Geeignete Härter sind Polyamine wie Diethylenetriamin Triethylentetramin, Aminoethylpiperazin, Isophorondiamin, Polyamidoamin, Diaminodiphenylmethan, Diaminodiphenolsulfone, Dicyandiamid.

Geeignete Härter sind mehrbasige Säuren oder deren Anhydride wie z.B. Phthalsäureanhydrid, Maleinsäureanhydrid, Tetrahydrophthalsäureanhydrid, Methyltetrahydrophthalsäureanhydrid, Hexahydrophthalsäureanhydrid, Methylhexahydrophthalsäureanhydrid.

Geeignete Härter sind Phenole wie z.B. Phenol-Novolak-Harz, Cresol-Novolak-Harz, Dicyclopentadien-Phenol-Addukt-Harz, Phenolaralkyl-Harz, Cresolaralkyl-Harz, Naphtholaralkyl Harz, Biphenol-modifiziertes Phenolaralkyl-Harz, Phenoltrimethylolmethan-Harz, Tetraphenylolethan-Harz, Naphthol-Novolak-Harz, Naphthol-Phenol-Kocondensat-Harz, Naphthol-Cresol-Kpcondensat-Harz, Biphenol- modifiziertes Phenol-Harz und Aminotriazinmodifiziertes Phenol-Harz

Diese Härter können alleine oder in Kombination miteinander eingesetzt werden.

Erfindungsgemäße Katalysatoren bzw. Beschleuniger für die Vernetzung bei der Polymerisation sind tertiäre Amine, Benzyldimethylamin, N-Alkylpyridine, Imidazol, 1-Methylimidazol, 2-Methylimidazol, 2-Ethyl-4-methylimidazol, 2-Ethyl4-methylimidazol, 2-Phenylimidazol, 2-Heptadecylimidazol, Metallsalz organischer Säuren, Lewis Säuren und Amin-Komplex-Salze.

Epoxidharze sind geeignet zum Verguss von elektrischen bzw. elektronischen Bauteilen und für Tränk- und lmprägnierprozesse. In der Elektrotechnik werden die verwendeten Epoxidharze überwiegend flammwidrig ausgerüstet und für Leiterplatten und Isolatoren eingesetzt.

Bevorzugt handelt es sich bei den Polymeren,um vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

Bevorzugt handelt es sich bei den Polymeren um vernetzbare Acrylharze, die sich von substituierten Acrylsäureestern ableiten, wie z.B. von Epoxyacrylaten, Urethanacrylaten oder Polyesteracrylaten.

Bevorzugt handelt es sich bei den Polymeren um Alkydharze, Polyesterharze und Acrylatharze, die mit Melaminharzen, Harnstoffharzen, Isocyanaten, Isocyanuraten, Polyisocyanaten oder Epoxidharzen vernetzt sind.

Eine flammgeschützte Polyurethan-Formmasse lässt sich durch Reaktion von 0,1 bis 50 Gew.-Teilen erfindungsgemäßer Phosphinsäure mit 30 bis 65 Gew.-Teilen Polyisocyanat und 30 bis 65 Gew.-Teilen Polyol herstellen.

Ein Verfahren zur Herstellung einer flammgeschützten Polyurethan-Formmasse ist dadurch gekennzeichnet, dass 170 bis 70 Gewichtsteile, bevorzugt 130 bis 80 Gewichtsteile, erfindungsgemäße Polyisocyanate mit 100 Gewichtsteilen erfindungsgemäßem Polyol, 0,1 bis 50 Gewichtsteilen erfindungsgemäßer Phosphinsäure und 0,1 bis 4 Gewichtsteilen, besonders bevorzugt 1 bis 2 Gewichtsteile, erfindungsgemäßem Katalysator zur Reaktion gebracht werden und wahlweise mit 0,1 bis 1,8 Gewichtsteilen, vorzugsweise 0,3 bis 1,6 Gewichtsteilen, Treibmittel aufgeschäumt werden.

Bevorzugte Polyole sind Alkenoxidaddukte von Ethylenglykol, 1,2-Propandiol, Bisphenol A, Trimethylolpropan, Glycerin, Pentaerythrol, Sorbit, Zucker, abgebaute Stärke, Ethylendiamin, Diaminotoluol und/oder Anilin, die als ein Initiator dienen. Die erfindungsgemäß bevorzugten Oxyalkylierungsmittel, enthalten bevorzugt von 2 bis 4 Kohlenstoffatome, besonders bevorzugt sind es Ethylenoxid und Propylenoxid.

Bevorzugte Polyester-Polyole werden durch Polykondensation eines Polyalkoholes wie Ethylenglykol, Diethylenglykol, Propylenglykol, 1,4-Butanediol, 1,5-Pentandiol, Methylpentandiol, 1,6-Hexanediol, Trimethylolpropan, Glycerin, Pentaerythritol, Diglycerol, Traubenzucker und/oder Sorbit, mit einer dibasischen Säure wie Oxalsäure, Malonsäure, Bernsteinsäure, Weinsäure, Adipinsäure, Sebacinsäure, Maleinsäure, Fumarsäure, Phthalsäure, Terephthalsäure erhalten. Diese Polyester-Polyole können alleine oder in Komination benutzt werden.

Geeignete Polyisocyanate sind aromatische, alicyclische or aliphatische Polyisocyanate, mit nicht weniger als zwei lsocyanat-Groupen und Mischungen davon. Bevorzugt sind aromatische Polyisocyanate wie Tolyldüsocyanat, Methylendiphenyldiisocyanat, Naphthylendiisocyanate, Xylylendiisocyanat, Tris/4-isocyanatophenyl)methan und Polymethylenepolyphenylendiisocyanate; alicyclische Polyisocyanate sind Methylendiphenyldiisocyanat, Tolyldiisocyanat und; aliphatische Polyisocyanate sind Hexamethylendiisocyanat, Isophorendiisocyanat, Demeryldiisocyanat, 1,1-Methylenbis(4-isocyanatocyclohexan-4,4'-Diisocyanatodicyclohexylmethan-Isomerengemisch, 1,4-Cyclohexyldiisocyanat, (R)Desmodur-Typen (Bayer) und Lysindiisocyanat und Mischungen davon.

Geeignete Polyisocyanate sind modifizierte Produkte, die durch Reaktion von Polyisocyanat mit Polyol, Harnstoff, Carbodiimid und/oder Biuret erhalten werden.

Geeignete Katalysatoren sind starke Basen, Alkalimetalsalze von carbonsäuren oder aliphatische tertiäre Amine. Bevorzugt sind quaternäres Ammonium hydroxide, Alkalimetalhydroxid oder Alkoxid, Natrium oder Kaliumacetat, Kaliumoctoat, Natriumbenzoat, 1,4-diazabicyclo[2.2.2]octan, N,N,N',N'-Tetramethylhexa-methylenediamin, N,N,N',N'-Tetramethylpropylenediamin, N,N,N',N',N"-Pentamethyl-diethylenetriamin, N,N'-Di-(C1-C2)-alkylpiperazin, Trimethylaminoethylpiperazin, N,N-Dimethylcyclohexylamin, N,N-Dimethylbenzylamin, N-Methylmorpholin, N-Ethylmorpholin, Trimethylamin, Triethylamin, Tributylamin, Triethylenediamin, Bis(dimethylaminoalkyl)piperazine, N,N,N',N'-tetramethylethylendiamin, N,N-Diethylbenzylamin, Bis(N,N-diethylaminoethyl)adipat, N,N,N',N'-Tetramethyl-1,3-butanediamin, N,N-Diethyl-[beta]-phenylethylamin, 1,2-Dimethylimidazol, 2-Methylimidazol usw.

Bevorzugt ist das Gewichtverhältnis des Polyisocyanate zu Polyol vorzugsweise 170 zu 70, vorzugsweise 130 zu 80 bezogen auf 100 Gewichtsteile des Polyols.

Bevorzugt ist das Gewichtverhältnis des Katalysators 0,1 bis 4 Gewichtsteile, besonders bevorzugt 1 bis 2 Gewichts-Teile bezogen auf 100 Gewichtsteile des Polyols.

Bevorzugte Treibmittel sind Wasser, Kohlenwasserstoff, Fluorchlorkohlenwasserstoff, Fluorkohlenwasserstoff etc.

Die Menge eines evtl. eingesetzten Blähmittels ist 0,1 bis 1,8 Gewichtsteile, vorzugsweise 0,3 bis 1,6 Gewichtsteile vorzugsweise 0,8 bis 1,6 Gewichtsteile bezogen auf 100 Gewichtsteile des Polyols.

Die Zersetzungstemperatur wird nach Standard-Thermogravimetrischen Verfahren bestimmt. Dabei ist die Zersetzungstemperatur als die Temperatur definiert bei der ein Gewichtsverlust von 2 % auftritt.

Verwendete Chemikalien
- HMEPPS:: 1-Hydroxy-1-methylethylphosphinsäure, H-P(O)(OH)C(CH₃)₂OH
- Wako V 65 B:: 2,2'-Azobis-2,4-dimethylvaleronitril
- Waco V50:: 2,2'-Azobis-2-amidinopropan Hydrochlorid
- VAZO 52:: 2,2'-Azobisisopropylbutyronitril
- VAZO 67:: 2,2'-Azobismethylbutyronitril
- VAZO 64:: AIBN 2,2'-Azobisisobutyronitril
- EBHS:: Ethylen-Bis-(1-Hydroxy-1-methylethyl)-phosphinsäure, HO-C(CH₃)₂-P(O)(OH)-CH₂-CH₂-P(O)(OH(-C(CH₃)₂-OH
- EBHNa:: Di-Natrium-Ethylen-Bis-(1-Hydroxy-1-methylethyl-phosphinat), HO-C(CH₃)₂-P(O)(ONa)-CH₂-CH₂-P(O)(ONa)-C(CH₃)₂-OH
- EBHA1:: Aluminium-Ethylen₋Bis-(1-Hydroxy-1-methylethyl)-phosphinat, HO-C(CH₃)₂-P(O)(OAl_{1/3})-CH₂-CH₂-P(O)(OAl_{1/3})-C(CH₃)₂-OH
- EBHZn:: Zink-Ethylen-Bis-(1-Hydroxy-1-methylethyl)-phosphinat, HO-C(CH₃)₂-P(O)(OZn_{1/2})-CH₂-CH₂-P(O)(OZn_{1/2})-C(CH₃)₂-OH
- EBHCa:: Calcium-Ethylen-Bis-(1-Hydroxy-1-methylethyl)-phosphinat, HO-C(CH₃)₂-P(O)(OCa_{1/2})-CH₂-CH₂-P(O)(OCa_{1/2})-C(CH₃)₂-OH
- EBHMg:: Magnesium-Ethylen-Bis-(1-Hydroxy-1-methylethyl)-phosphinat, HO-C(CH₃)₂-P(O)(OMg_{1/2})-CH₂-CH₂-P(O)(OMg_{1/2})-C(CH₃)₂-OH
- EBHFe:: Eisen-Ethylen-Bis-(1-Hydroxy-1-methylethyl)-phosphinat, HO-C(CH₃)₂-P(O)(OFe_{1/3})-CH₂-CH₂-P(O)(OFe_{1/3})-C(CH₃)₂-OH
- EBPS:: Ethylen-Bisphosphinsäure, H-P(O)(OH)-CH₂-CH₂-P(O)(OH)-H
- EBPNa:: Dinatrium-Ethylen-Bisphosphinat, H-P(O)(ONa)-CH₂-CH₂-P(O)(ONa)-H
- EBPA1:: Aluminium-Ethylen-Bisphosphinat, H-P(O)(OAl_{1/3})-CH₂-CH₂-P(O)(OAl_{1/3})-H
- EBPZn:: Zink-Ethylen-Bisphosphinat, , H-P(O)(OZn_{1/2})-CH₂-CH₂-P(O)(OZn_{1/2})-H
- EBPCa:: Calcium-Ethylen-Bisphosphinat, H-P(O)(OCa_{1/2})-CH₂-CH₂-P(O)(OCa_{1/2})-H
- EBPFe:: Eisen-Ethylen-Bisphosphinat, H-P(O)(OFe_{1/3})-CH₂-CH₂-P(O)(OFe_{1/3})-H
- EBPMel:: Melamin-Ethylen-Bisphosphinat, H-P(O)(OC₃H₆N₆)-CH₂-CH₂-P(O)(OC₃H₆N₆)-H
- Polystyrol:: Polystyrol 143 E, Fa. BASF
- PA 6.6:: ®Ultramid A3, Fa. BASF
- MPP:: ®Melapur 200/70, Fa. Ciba SC
- Glasfasern 1:: VPPG 3540, Fa. PPG Industries, Inc
- Glasfasern 2:: ®Vetrotex EC 10983, Fa. Saint-Gobain

Beispiele

Herstellung von konzentrierter Hypophosphoriger Säure (HPS, H₃PO₂) Konzentrierte HPS kann nach dem Stand der Technik hergestellt werden. Kommerziell käufliche 50 % wässrige Hypophosphorige Säure wird dabei konzentriert durch Eindampfung auf Gewichtskonstanz auf einem Rotationsverdampfer bei Wasserstrahlvakuum und einer Temperatur, die 40 °C nicht überschreitet.
1-Hydroxy-1-methylethyl-phosphinsäure (HMEPPS) 1-Hydroxy-1-methylethyl-phosphinsäure wird nach dem Stand der Technik aus konzentrierter HPS hergestellt und als blassgelbes Öl bis weißes Harz in 96 % Ausbeute isoliert

Herstellvorschrift für Ethylen-Bis-(1-Hydroxy-1-methylethyl-phosphinsäure) In einem Zweiliter-Fünfhalskolben mit Rührer, Thermometer, Intensivkühler, Initiatordosierung, Fritte zur Acetyleneinleitung und Stickstoffüberlagerung wurden HMEPPS und Amylalkohol vorgelegt und homogenisiert. Dabei wurde die Reaktionsmischung aufgeheizt. Die Rührgeschwindigkeit betrug 460 U/min. Nach dem Erreichen der Reaktionstemperatur wurde der Initiator als 10 %ige Lösung im entsprechenden Lösungsmittel mittels einer Pumpe zudosiert. Acetylen wurde mit 5 - 6 l/h eingeleitet. Das Produkt fällt im Laufe der Reaktion aus und wird nach Beendigung der Reaktion über eine Nutsche abgesaugt und zweimal mit Aceton gewaschen. Das Pulver wurde im Trockenschrank bei 120 °C getrocknet. Typische Reinheit: 93,6 % (³¹P-NMR). Das Produkt ist röntgenkristallin. Folgende Reflexe (CuK_{alpha 1}-Strahlung 1,54056 Ang) werden beobachtet: Rel. Intensität / d-Wert; 20,2, 7,78620; 62,9, 5,63264; 100,0, 5,33438; 27,5, 4,91046; 47,2 %, 4,49822 Ang. Die Hydroxylgruppenzahl beträgt 290 mg KOH/g.

Das Produkt kann wahlweise zur weiteren Reinigung mit Ethanol diggeriert werden (25 %ige Dispersion). Die Ausbeuten bei diesem Schritt sind 80-90 % und führen zu Reinheiten um 99,2 % (³¹P-NMR).

### Beispiel 1

Aus 345 g 1-Hydroxy-1-methylethylphophinsäure werden mit 29,8 g Wako V65 B Initiator in insgesamt 803 g Amylalkohol bei 80°C während 11 h 210 g Produkt erhalten.

### Beispiel 2

Aus 345 g 1-Hydroxy-1-methylethylphophinsäure werden mit 18,3 g VAZO 52 Initiator in insgesamt 803 g Amylalkohol bei 50°C während 11h 141 g Produkt erhalten.

### Beispiel 3

Aus 345 g 1-Hydroxy-1-methylethylphophinsäure werden mit 19,7 g AIBN Initiator in insgesamt 803 g Amylalkohol bei 120°C während 8h 240g Produkt erhalten.

### Beispiel 4

Aus 345 g 1-Hydroxy-1-methylethylphophinsäure werden mit 6,9 g Wako V65 B Initiator in insgesamt 803 g Amylalkohol bei 80°C während 32h 187 g Produkt erhalten.

### Beispiel 5

Aus 345 g 1-Hydroxy-1-methylethylphophinsäure werden mit 29,8 g Wako V65 B Initiator in insgesamt 350 g Amylalkohol bei 80°C während 11 h 259 g Produkt erhalten.

### Beispiel 6

### (Di-Natrium-Ethylen-(Bis-1-Hydroxy-1-methylethyl-phosphinat))

In einem 1 L-Becherglas werden 141 g demin Wasser vorgelegt und unter Rühren vorsichtig zunächst 40 g NaOH-Plätzchen, dann 137,1g EBHS zugegeben. Es werden 318 g einer 50 gew.-%igen Lösung von EBHNa erhalten.

Allgemeine Vorschrift zur Herstellung der Ethylen-Bis-(1-Hydroxy-1-methylethyl)-phosphinat-Salze und Ethylen-Bisphosphinat-Salze

In einem Zweiliter- bzw. Vierliter-Sechshalskolben (mit Rührer, Thermometer, Stopfen, Einleitungsrohr und Rückflusskühler) werden entweder das demineralisierte Wasser vorgelegt und das Metallsalz unter Erwärmen auf die Fällungstemperatur gelöst oder die fertige Metallsalzlösung vorgelegt und auf Fällungstemperatur erhitzt. Über ein Einleitungsrohr wird mit Hilfe einer Pumpe innerhalb vorgegebener Zeit die berechnete Menge EBHNa-Lsg zugepumpt. Die vorgewählte Fällungstemperatur wird dabei gehalten und bei vorgewählter Rührgeschwindigkeit gerührt. Das feste Produkt wird über eine Nutsche heiß abfiltriert, danach mit demineralisiertem Wasser bei 90 °C dispergiert (in der fünffachen Menge der theoretischen Ausbeute) und wiederum über eine Nutsche heiß abfiltriert. Der Feststoff wird 15h im Trockenschrank bei 100 °C und 30 mbar getrocknet.

### Beispiel 7

### (Aluminium-Ethylen-(Bis-1-Hydroxy-1-methylethyl)₋phosphinat)

Nach der allgemeinen Vorschrift zur Herstellung der Metall-Ethylen-Bis-(1-Hydroxy-1-methylethyl)-phosphinaten werden 318 g EBHNa-Lösung mit 209 g Aluminiumsulfatlösung während 2 h bei 90 °C und 750 U/min Rührgeschwindigkeit umgesetzt. Es werden 132 g festes Produkt erhalten. Das Produkt ist röntgenkristallin. Folgende Reflexe (CuK_{alpha 1}-Strahlung 1,54056 Ang) werden beobachtet: Rel. Intensität /d-Wert; 65,6, 11,03554; 100,0, 10,55511; 30,2, 8,91804; 33,4 %, 8,74638Ang. Die Analysendaten sind in Tabelle 2 aufgeführt.

### Beispiel 8

### (Zink-Ethylen-Bis-(1-Hydroxy-1-methylethyl)-phosphinat)

Nach der allgemeinen Vorschrift zur Herstellung der Metall-Ethylen-Bis-(1-Hydroxy-1-methylethyl)-phosphinaten werden 318 g EBHNa-Lösung mit 144 g Zinksulfatheptahydrat, das in 1.240 g demin Wasser gelöst ist, während 2 h bei 90 °C und 250 U/min Rührgeschwindigkeit umgesetzt. Es werden 135 g festes Produkt erhalten. Das Produkt ist röntgenkristallin. Folgende Reflexe (Cuk_{alpha 1}-Strahlung 1,54056 Ang) werden beobachtet: Rel. Intensität / d-Wert; 100,0, 11,09087; 35,7, 10,67607; 29,4, 5,26978; 40,3 %, 4,91046Ang. Die Analysendaten sind in Tabelle 2 aufgeführt.

### Beispiel 9

### (Magnesium-Ethylen-Bis-(1-Hydroxy-1-methytethyl)-phosphinat)

Nach der allgemeinen Vorschrift zur Herstellung der Metall-Ethylen-Bis-(1-Hydroxy-1-methylethyl)-phosphinaten werden 318 g EBHNa-Lösung mit 102 g Magnesiumchloridhexahydrat, das in 568 g demin Wasser gelöst ist, während 2 h bei 50 °C und 750 U/min Rührgeschwindigkeit umgesetzt. Es werden 111 g festes Produkt erhalten. Das Produkt ist röntgenkristallin. Folgende Reflexe (CUK_{alpha 1}-Strahlung 1,54056 Ang) werden beobachtet: Rel. Intensität / d-Wert; 100,0 %, 11,23166Ang. Die Analysendaten sind in Tabelle 2 aufgeführt.

### Beispiel 10

### (Eisen-Ethylen-Bis-(1 1-Hydroxy-1-methylethyl)-phosphinat)

Nach der allgemeinen Vorschrift zur Herstellung der Metall-Ethylen-Bis-(1-Hydroxy-1-methylethyl)-phosphinaten werden 318 g EBHNa-Lösung mit 67 g Eisensulfat, das in 2.710 g demin Wasser gelöst ist, während 8 h bei 90 °C und 750 U/min Rührgeschwindigkeit umgesetzt. Es werden 139 g festes Produkt erhalten. Die Analysendaten sind in Tabelle 2 aufgeführt.

### Beispiel 11

### Herstellvorschrift für Ethylen-Bisphosphinsäure durch Acetonabspaltung aus Ethylen-Bis-(1-Hydroxy-1-methylethyl-phosphinsäure)

In einen Vierhalskolben, Destillationsviereck, Tropftrichter und Thermometer wird 274 g mol EBHS eingewogen und mit 4 mol Salzsäure (37 %ig) versetzt. Die Apparatur wird mit Stickstoff inertisiert. Mit einem Ölbad wird bis zur Siedetemperatur der Salzsäure erhitzt und die Lösung am Rückfluss gekocht (Kopftemperatur 105-108 °C). Durch die Abspaltung des Acetons sinkt die Kopftemperatur mit der Zeit ab. Es wird immer wieder Destillat abgelassen bis die Kopftemperatur konstant bei 108°C bleibt (zwischendurch mittels Tropftrichter erneut mit 37 %iger Salzsäure auffüllen). Ist Siedekonstanz erreicht wird die restliche Salzsäure mit einem Rotationsverdampfer bei 1 mbar und max. 110 °C abdestilliert.

### Beispiel 12

### (Dinatrium-Ethylen-Bispliosphinat)

In einem 1 L-Becherglas werden 83 g demin Wasser unter Rühren vorgelegt und vorsichtig zunächst 40 g NaOH-Plätzchen, dann 79 EBPS zugegeben. Es werden 202 g einer 50 gew.-%igen Lösung von EBPNa erhalten.

### Beispiel 13

### (Aluminium-Ethylen-Bisphosphinat)

Nach der allgemeinen Vorschrift zur Herstellung der Metall-Ethylen-Bisphosphinate werden 202 g EBPNa-Lösung mit 209 g Aluminiumsulfatlösung während 2 h bei 90 °C und 750 U/min Rührgeschwindigkeit umgesetzt. Es werden 71 g festes Produkt erhalten. Die Analysendaten sind in Tabelle 3 aufgeführt.

### Beispiel 14

### (Zink-Ethylen-Bisphosphinat)

Nach der allgemeinen Vorschrift zur Herstellung der Metall-Ethylen-Bisphosphinate werden 202 g EBPNa-Lösung mit 144 g Zinksulfatheptahydrat, das in 770 g demin Wasser gelöst ist, während 1 h bei 100 °C und 1.500 U/min Rührgeschwindigkeit umgesetzt. Es werden 95 g festes Produkt erhalten. Das Produkt ist röntgenkristallin. Folgende Reflexe (CuK_{alpha 1}-Strahlung 1,54056 Ang) werden beobachtet: Rel. Intensität / d-Wert; 39,2, 7,82398; 37,2, 6,52943; 100,0, 3,90381; 63,3 %, 3,22809Ang. Die Analysendaten sind in Tabelle 3 aufgeführt.

### Beispiel 15

### (Calcium-Ethylen-Bisphosphinat)

Nach der allgemeinen Vorschrift zur Herstellung der Metall-Ethylen-Bisphosphinate werden 202 g EBPNa-Lösung mit 74 g Calciumchloriddihydrat, das in 380 g demin Wasser gelöst ist, während 2 h bei 90 °C und 750 U/min Rührgeschwindigkeit umgesetzt. Es werden 58 g festes Produkt erhalten. Die Analysendaten sind in Tabelle 3 aufgeführt.

### Beispiel 16

### (Eisen-Ethylen-Bisphosphinat)

Nach der allgemeinen Vorschrift zur Herstellung der Metall-Ethylen-Bisphosphinate werden 202 g EBPNa-Lösung mit 67 g Eisensulfat, das in 2.720 g demin Wasser gelöst ist, während 2 h bei 90 °C und 750 U/min Rührgeschwindigkeit umgesetzt. Es werden 90 g festes Produkt erhalten. Die Analysendaten sind in Tabelle 3 aufgeführt.

### Beispiel 17

### (Dimelamin-Ethylen-Bisphosphinat)

In der Hitze werden 79 g EBPS und 126 g Melamin in Ethylenglycol gelöst. Beim Abkühlen fallen 148 g festes Produkt aus. Das Produkt ist röntgenkristallin. Folgende Reflexe (CuK_{alpha 1}-Strahlung 1,54056 Ang) werden beobachtet: Rel. Intensität / d-Wert; 39,0, 5,71392; 40,2, 3,95093; 100,0 %, 3,43265 Ang. Die Analysendaten sind in Tabelle 3 aufgeführt.

### Beispiel 18

### (Vergleich)

Gemäß der allgemeinen Vorschrift wird eine Mischung von 70 Gew.-% Polystyrol, und 30 Gew.-% Calciumhypophosphit auf einem Doppelschneckenextruder bei 170 °C zu einer Polymerformmasse compoundiert. Es tritt Entzündung durch Zersetzung des Flammschutzmittels bei der Verarbeitung ein.

### Beispiel 19

Gemäß der allgemeinen Vorschrift wird eine Mischung von 70 Gew.-% Polystyrol, und 30 Gew.-% Produkt aus Beispiel 12 auf einem Doppelschnecken-Extruder bei 170 °C zu einer Polymerformmasse compoundiert. Nach Trocknung werden die Formmassen auf einer Spritzgießmaschine bei 200 bis 250 °C zu Polymerformkörper verarbeitet und eine UL-94 Klassifizierung von V-0 bestimmt.

### Beispiel 20

Gemäß der allgemeinen Vorschrift wird eine Mischung von 70 Gew.-% Polystyrol, und 30 Gew.-% Produkt aus Beispiel 13 auf einem Doppelschnecken-Extruder bei 170 °C zu einer Polymerformmasse compoundiert. Nach Trocknung werden die Formmassen auf einer Spritzgießmaschine bei 200 bis 250 °C zu Polymerformkörper verarbeitet und eine UL-94 Klassifizierung von V-0 bestimmt.

### Beispiel 21

Gemäß der allgemeinen Vorschrift wird eine Mischung von 70 Gew.-% Polystyrol, und 30 Gew.-% Produkt aus Beispiel 14 auf einem Doppelschneckenextruder bei 170 °C zu einer flammgeschützten Polymerformmasse compoundiert. Nach Trocknung wird die flammgeschützte Formmasse auf einer Spritzgießmaschine bei 200 bis 250 °C zu flammgeschützten Polymerformkörpern verarbeitet und eine UL-94 Klassifizierung von V-0 bestimmt.

### Beispiel 22

Gemäß der allgemeinen Vorschrift wird eine Mischung von 70 Gew.-% Polystyrol, und 30 Gew.-% Produkt aus Beispiel 15 auf einem Doppelschneckenextruder bei 170 °C zu einer flammgeschützten Polymerformmasse compoundiert. Nach Trocknung wird die flammgeschützte Formmasse auf einer Spritzgießmaschine bei 200 bis 250 °C zu flammgeschützten Polymerformkörpern verarbeitet und eine UL-94 Klassifizierung von V-0 bestimmt.

### Beispiel 23

Gemäß der allgemeinen Vorschrift wird eine Mischung von 50 Gew.-% PA 6.6, 12,5 Gew.-% Produkt aus Beispiel 12, 12,5 Gew.-% MPP und 25 Gew.-% Glasfasern auf einem Doppelschneckenextruder bei 260 bis 280 °C zu einer flammgeschützten Polymerformmasse compoundiert. Nach Trocknung wird die flammgeschützte Formmasse auf einer Spritzgießmaschine bei 260 bis 290 °C zu flammgeschützten Polymerformkörpern verarbeitet und eine UL-94 Klassifizierung von V-1 bestimmt.

### Beispiel 24

Gemäß der allgemeinen Vorschrift wird eine Mischung von 50 Gew.-% PBT, 12,5 Gew.-% Produkt aus Beispiel 13, 12,5 Gew.-% MPP und 25 Gew.-% Glasfasern auf einem Doppelschneckenextruder bei 230 bis 260 °C zu einer flammgeschützten Polymerformmasse compoundiert. Nach Trocknung wird die flammgeschützte Formmasse auf einer Spritzgießmaschine bei 230 bis 270 °C zu flammgeschützten Polymerformkörpern verarbeitet und eine UL-94 Klassifizierung von V-1 bestimmt.

Beispiel 25 (Vergleich)

Eine Klebemasse wird aus 82 % Airflex 920 (Air Products and Chemicals Inc), 1 % Tego-Entschäumer (East Falls Corp.), 15 % AP 422 (Clariant GmbH) und 2 % Alcogum 296W (ALCO Chemical) hergestellt. 100g dieser Masse werden in eine 250ml Weithalsschraubflasche eingewogen und 8 h bei 60 °C gelagert. Mit Formaldehyd-Teststäbchen der Fa. Dräger Sicherheitstechnik GmbH (Typ 0.2/a) wird der Gasraum nach der Lagerung untersucht. Nach Zehnmaligem Pumpen wird eine Formaldehydkonzentration von größer als 50 ppm abgelesen.

### Beispiel 26

Eine Klebemasse wird aus 80 % Airflex 920 (Air Products and Chemicals Inc), 1 % Tego-Entschäumer (East Falls Corp.), 15% AP 422 (Clariant GmbH), 2% Alcogum 296W (ALCO Chemical) und 2 % des Produktes aus Beispiel 11 hergestellt. Das Produkt wird wie in Beispiel 25 beschrieben getestet. Es wird eine Formaldehydkonzentration von ca. 10 ppm abgelesen. Der Kleber ist vor allem für Bauanwendungen geeignet.

**Tabelle 1: Herstellung von Ethylen-Bis-(1-Hydroxy-2-methylethyl-phosphinsäure)**

| Beispiel | HPS-Addukt | Initiator | | LM | | Acetylen | T | t | Produkt | | ZT | 31P-NMR |
|---|---|---|---|---|---|---|---|---|---|---|---|---|
| | g | Typ | g | Typ | 9 | 9 | °C | h | g | % | °C, 2% GV | ppm |
| 1 | 345 | Wako V65 B | 29,8 | AmOH | 803 | 64 | 80 | 11 | 210 | 55 | 167 | 54,8 |
| 2 | 345 | VAZO 52 | 18,3 | AmOH | 803 | 64 | 50 | 11 | 141 | 37 | | |
| 3 | 345 | AIBN | 19,7 | OctOH | 803 | 64 | 120 | 8 | 240 | 63 | | |
| 4 | 345 | Wako V65 B | 6,9 | AmOH | 803 | 64 | 80 | 32 | 187 | 49 | | |
| 5 | 345 | Wako V65 B | 29,8 | AmOH | 350 | 64 | 80 | 11 | 259 | 68 | | |

| | | | | | | | | | | | | |
|---|---|---|---|---|---|---|---|---|---|---|---|---|
| GV = Gewichtsverlust ZT = Zersetzungstemperatur | | | | | | | | | | | | |

**Tabelle 2: Herstellung von Ethylen-(Bis-1-Hydroxy-1-methylethyl-phosphinat)-Salzen**

| Beispiel | Edukt A | | Edukt B | | LM | | t | T | Rührgeschwindigkeit | Produkt | ZT | 31 P-NMR | P-Gehalt | |
|---|---|---|---|---|---|---|---|---|---|---|---|---|---|---|
| | | g | | g | | g | h | °C | U/min | g | °C 2% GV | ppm | exp % | th % |
| 6 | EBHS | 137 | NaOH | 40 | H₂O | 141 | 0,5 | 30 | 300 | 318 | - | 46 | - | - |
| 7 | EBHNa | 318 | Al₂(SO₄)₃-Lsng 4,3% Al | 209 | H₂O | 0 | 2 | 90 | 750 | 132 | 248 | 46 | 20,6 | 21,4 |
| 8 | EBHNa | 318 | ZnSO₄^{*}7aq | 144 | H₂O | 1240 | 2 | 90 | 250 | 135 | 283 | 46 | 17,9 | 18,4 |
| 9 | EBHNa | 318 | MgCl₂^{*}6aq | 102 | H₂O | 568 | 2 | 50 | 750 | 111 | 260 | 46 | 19,8 | 20,9 |
| 10 | EBHNa | 318 | Fe₂(SO₄)₃ | 67 | H₂O | 2710 | 8 | 90 | 750 | 139 | 262 | 46 | 19,5 | 20 |

**Tabelle 3: Herstellung von Ethylen-Bisphosphinat-Salzen**

| Beispiel | Edukt A | | Edukt B | | LM | | t | T | Rührgeschwindigkeit | Produkt | ZT | 31 P-NMR | P-Gehalt | |
|---|---|---|---|---|---|---|---|---|---|---|---|---|---|---|
| | | g | | g | | g | h | °C | U/min | g | °C 2% GV | ppm | exp % | th % |
| 12 | EBPS | 79 | NaOH | 40 | H₂O | 83 | 0,5 | 30 | 300 | 202 | - | 31 | - | - |
| 13 | EBPNa | 202 | Al₂(SO₄)₃-Lsng 4,3% Al | 209 | H₂O | 0 | 2 | 90 | 750 | 71 | > 600 | 31 | 33,2 | 35,6 |
| 14 | EBPNa | 202 | ZnSO₄^{*}7aq | 144 | H₂O | 770 | 1 | 100 | 1500 | 95 | >1000 | 31 | 27,7 | 28,0 |
| 15 | EBPNa | 202 | CaCl₂^{*}2aq | 74 | H₂O | 380 | 2 | 90 | 750 | 58 | > 600 | 31 | 30,0 | 31,6 |
| 16 | EBPNa | 202 | Fe₂(SO₄)₃ | 67 | H₂O | 2720 | 2 | 90 | 750 | 90 | > 600 | 31 | 29,9 | 32,1 |
| 17 | EBPS | 79 | Melamin | 126 | Ethylenglykol | 3900 | 2 | 100 | 750 | 148 | 279 | 31 | 14,9 | 15,1 |

**Tabelle 4: Flammgeschützte Polymerformmassen und Flammschutztests an flammgeschützten Polymerformkörpern**

| Beispiele | | | 18 | 19 | 20 | 21 | 22 |
|---|---|---|---|---|---|---|---|
| Polystyrol | | [Gew.-%] | 70 | 70 | 70 | 70 | 70 |
| Calciumhypophosphit | | [Gew.-%] | 30 | | | | |
| Produkt aus Beispiel 13 | | [Gew.-%] | | 30 | | | |
| Produkt aus Beispiel 14 | | [Gew.-%] | | | 30 | | |
| Produkt aus Beispiel 15 | | [Gew.-%] | | | | 30 | |
| Produkt aus Beispiel 16 | | [Gew.-%] | | | | | 30 |
| | UL-94 Classification (1,5 mm) | | Entzündung bei Verarbeitung | V-0 | V-0 | V-0 | V-0 |

**Tabelle 5: Flammgeschützte Polymerformmassen und Flammschutztests an flammgeschützten Polymerformkörpern**

| Beispiele | 23 | 24 |
|---|---|---|
| | [Gew.-%] | [Gew.-%] |
| PA 6.6 | 50 | |
| PBT | | 50 |
| Glasfasern 1 | 25 | |
| Glasfasern 2 | | 25 |
| Produkt aus Beispiel 13 | 12,5 | |
| Produkt aus Beispiel 14 | | 12,5 |
| MPP | 12,5 | - |
| MC | - | 12,5 |
| UL-94 class | V-1 | V-1 |

## Patentansprüche

1. Ethylendiphosphinsäuren und ihre Salze der allgemeinen Formel (I)
A-P(O)(OX)-CR¹R²-CR³R⁴-P(O)(OX)-A (I)
in der A CR⁵R⁶-OH,
R¹, R², R³, R⁴, R⁵, R⁶ gleich oder verschieden sind und unabhängig voneinander H, C₁-C₂₀-Alkyl, C₆-C₂₀-Aryl und/oder C₆-C₂₀-Aralkyl und
X H, ein Alkalimetall, ein Element der zweiten Haupt- und Nebengruppe, ein Element der dritten Haupt- und Nebengruppe, ein Element der vierten Haupt- und Nebengruppe, ein Element der fünften Haupt- und Nebengruppe, ein Element der sechsten Nebengruppe, ein Element der siebten Nebengruppe, ein Element der achten Nebengruppe und/oder eine Stickstoffbase bedeuten.

2. Ethylendiphosphinsäuren und ihre Salze nach Anspruch 1, **dadurch gekennzeichnet, dass** R¹, R², R³, R⁴, R⁵, R⁶ gleich oder verschieden sind und unabhängig voneinander H, Methyl, Ethyl, n-Propyl, i-Propyl, n-Butyl, tert.-Butyl, n-Pentyl und/oder Phenyl bedeuten.

3. Verfahren (1) zur Herstellung von Ethylendiphosphinsäuren und ihren Salzen der allgemeinen Formel (I)
A-P(O)(OX)-CR¹R²-CR³R⁴-P(O)(OX)-A (I)
in der A CR⁵R⁶-OH,
R¹, R², R³, R⁴, R⁵, R⁶ gleich oder verschieden sind und unabhängig voneinander H, C₁-C₂₀-Alkyl, C₆-C₂₀-Aryl und/oder C₆-C₂₀-Aralkyl und
X H, Alkalimetall, bedeuten, **dadurch gekennzeichnet, dass** man
a) ein Monophosphinsäureaddukt der Formel (II)
H-P(O)(OX)-A (II)
mit Acetylen oder einer Acetylenverbindung umsetzt und
b) wahlweise die erhaltenen Ethylendiphosphinsäure des Typs
A-P(O)(OX)-CR¹R²-CR³R⁴-P(O)(OX)-A
von Nebenprodukten abtrennt.

4. Verfahren (2) zur Herstellung von Ethylen-Bis-(Hydroxyalkylphosphinsäure)-Salzen oder Ethylendiphosphinsäure-Salzen des Typs
A-P(O)(OX)-CR¹ R²-CR³R⁴-P(O)(OX)-A
worin A, R¹, R², R³, R⁴, R⁵ und R⁶ die gleiche Bedeutung wie in Anspruch 1 haben und X ein Alkalimetall, ein Element der zweiten Haupt- und Nebengruppe, ein Element der dritten Haupt- und Nebengruppe, ein Element der vierten Haupt- und Nebengruppe, ein Element der fünften Haupt- und Nebengruppe, ein Element der sechsten Nebengruppe, ein Element der siebten Nebengruppe, ein Element der achten Nebengruppe und/oder eine Stickstoffbase bedeuten, **dadurch gekennzeichnet, dass** eine Ethylen-Bis-(Hydroxyalkylphosphinsäure) oder Ethylendiphosphinsäure des Typs
A-P(O)(OX)-CR¹R²-CR³R⁴-P(O)(OX)-A
worin A, R¹, R², R³, R⁴, R⁵ und R⁶ die gleiche Bedeutung wie in Anspruch 1 haben und X H bedeutet, in einem Lösungsmittelsystem mit einem Reaktionspartner 1, bei dem es sich um eine Verbindung eines Alkalimetalls, eines Elements der zweiten Haupt- und Nebengruppe, eines Elements der dritten Haupt- und Nebengruppe, eines Elements der vierten Haupt- und Nebengruppe, eines Elements der fünften Haupt- und Nebengruppe, eines Elements der sechsten Nebengruppe, eines Elements der siebten Nebengruppe, eines Elements der achten Nebengruppe und/oder eine Stickstoffbase handelt, umgesetzt wird.

5. Verfahren (3) zur Herstellung von Ethylen-Bis-(Hydroxyalkylphosphinsäure)-Salzen oder Ethylendiphosphinsäure-Salzen des Typs
A-P(O)(OX)-CR¹R²-CR³R⁴-P(O)(OX)-A
worin A, R¹, R², R³, R⁴, R⁵ und R⁶ die gleiche Bedeutung wie in Anspruch 1 haben und X ein Element der zweiten Haupt- und Nebengruppe, ein Element der dritten Haupt- und Nebengruppe, ein Element der vierten Haupt- und Nebengruppe, ein Element der fünften Haupt- und Nebengruppe, ein Element der sechsten Nebengruppe, ein Element der siebten Nebengruppe, ein Element der achten Nebengruppe und/oder eine Stickstoffbase bedeuten, **dadurch gekennzeichnet, dass** eine Ethylen-Bis-(Hydroxyalkylphosphinsäure) oder Ethylendiphosphinsäure des Typs
A-P(O)(OX)-CR¹R²-CR³R⁴-P(O)(OX)-A
worin A, R¹, R², R³, R⁴, R⁵ und R⁶ die gleiche Bedeutung wie in Anspruch 1 haben und X ein Alkalimetall bedeutet, in einem Lösungsmittelsystem mit einem Reaktionspartner II zu einem anderen Metallsalz (Nicht-Alkalimetallsalz) umgesetzt wird.

6. Verfahren nach Anspruch 5, **dadurch gekennzeichnet, dass** es sich bei dem Reaktionspartner II um Borate, Carbonate, Hydroxocarbonate, Hydroxocarbonat-hydrate, gemischte Hydroxocarbonate, gemischte Hydroxocarbonathydrate, Phosphate, Sulfate, Sulfathydrate, Hydroxosulfathydrate, gemischte Hydroxosulfathydrate, Oxysulfate, Acetate, Nitrate, Fluoride, Fluoridhydrate, Chlorid, Chloridhydrate, Oxychloride, Bromide, Iodide, Iodidhydrate Carbonsäurederivate und/oder Alkoxide handelt.

7. Verwendung von Ethylendiphosphinsäuren nach Anspruch 1 oder 2 als Flammschutzmittel, insbesondere Flammschutzmittel für Klarlacken und Intumeszenzbeschichtungen, Flammschutzmittel für Holz und andere cellulosehaltige Produkte, als reaktives und/oder nicht reaktives Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung.

8. Verwendung von Ethylendiphosphinsäuren nach Anspruch 1 oder 2 als Binder für Giesereimassen, Formsande; als Vernetzer bzw. Beschleuniger beim Aushärten von Epoxyharzen, Polyurethanen und ungesättigten Polyesterharzen; als Polymerstabilisatoren, wie als Lichtschutzstabilisator, Radikalfänger und/oder Thermostabilisatoren für Baumwollgewebe, Polymerfasern, Kunststoffe; als Pflanzenschutzmittel, wie als Pflanzenwachstumsregulator, als Herbizid, Pestizid oder Fungizid; Sequestrierungsmittel, bei der Mineralölgewinnung und in Metallbehandlungsmitteln, Mineralöl-Additiv; Korrosionsschutzmittel in Wasch- und Reinigungsmittelanwendungen; in Elektronikanwendungen; als Radikalfänger in photosensitiven Schichten; als Aldehydfänger; als Formaldehydfänger in Klebemassen, Formkörpern.

9. Flammgeschützte thermoplastische Polymerformmasse enthaltend 0,5 bis 45 Gew.-% Ethylendiphosphinsäure nach Anspruch 1 oder 2 und 0,5 bis 99,5 Gew.-% thermoplastisches Polymer oder Mischungen derselben, wobei die Summe der Komponenten 100 Gew.-% beträgt.

10. Flammgeschützte duroplastische Masse, enthaltend 0,1 bis 45 Gew.-% Ethylendiphosphinsäure nach Anspruch 1 oder 2, 40 bis 89,9 Gew.-% ungesättigte Polyester und 10 bis 60 Gew.-% Vinylmonomer, wobei die Summe der Komponenten 100 Gew.-% beträgt.

11. Flammwidrig ausgerüstetes Epoxidharz, enthaltend 0,5 bis 50 Gew.-% Ethylendiphosphinsäure nach mindestens Anspruch 1 oder 2, 5, 5 bis 99,5 Gew.-% eines Epoxidharzes und 0 bis 20 Gew.-% eines Härters, wobei die Summe der Komponenten 100 Gew.-% beträgt.

## Claims

1. An ethylenediphosphinic acid or salt thereof having the formula (I)
A-P(O)(OX)-CR¹R²-CR³R⁴-P(O)(OX)-A (I)
where A is CR⁵R⁶-OH,
R¹, R², R³, R⁴, R⁵, R⁶ are identical or different and are each, independently of one another, H, C₁-C₂₀-alkyl, C₆-C₂₀-aryl or C₆-C₂₀-aralkyl and
X is H, an alkali metal, an element of main or transition group 2, an element of main or transition group 3, an element of main or transition group 4, an element of main or transition group 5, an element of transition group 6, an element of transition group 7, an element of transition group 8 and/or a nitrogen base.

2. An ethylenediphosphinic acid or salt thereof as claimed in claim 1, wherein R¹, R², R³, R⁴, R⁵, R⁶ are identical or different and are each, independently of one another, H, methyl, ethyl, n-propyl, i-propyl, n-butyl, tert-butyl, n-pentyl or phenyl.

3. A process (1) for preparing ethylenediphosphinic acids and salts thereof having the formula (I)
A-P(O)(OX)-CR¹R²-CR³R⁴-P(O)(OX)-A (I)
where A is CR⁵R⁶-OH_{,}
R¹, R², R³, R⁴, R⁵, R⁶ are identical or different and are each, independently of one another, H, C₁-C₂₀-alkyl, C₆-C₂₀-aryl or C₆-C₂₀-aralkyl and
X is H or an alkali metal, wherein
a) a monophosphinic acid adduct of the formula (II)
H-P(O)(OX)-A (II)
is reacted with acetylene and an acetylene compound and
b) if desired, the resulting ethylenediphosphinic acid of the type
A-P(O)(OX)-CR¹R²-CR³R⁴-P(O)(OX)-A
is separated off from by-products.

4. A process (2) for preparing ethylenebis(hydroxyalkylphosphinic acid) salts or ethylenediphosphinic acid salts of the type
A-P(O)(OX)-CR¹R²-CR³R⁴-P(O)(OX)-A
where A, R¹, R², R³, R⁴, R⁵ and R⁶ are as defined in claim 1 and X is an alkali metal, an element of main group or transition group 2, an element of main or transition group 3, an element of main or transition group 4, an element of main or transition group 5, an element of transition group 6, an element of transition group 7, an element of transition group 8 and/or a nitrogen base, wherein an ethylenebis(hydroxyalkylphosphinic acid) or ethylenediphosphinic acid of the type
A-P(O)(OX)-CR¹R²-CR³R⁴-P(O)(OX)-A
where A, R¹, R², R³, R⁴, R⁵ and R⁶ are as defined in claim 1 and X is H, is reacted in a solvent system with a reactant I which is a compound of an alkali metal, of an element of main or transition group 2, of an element of main or transition group 3, of an element of main or transition group 4, of an element of main or transition group 5, of an element of transition group 6, of an element of transition group 7, of an element of transition group 8 and/or a nitrogen base.

5. A process (3) for preparing ethylenebis(hydroxyalkylphosphinic acid) salts or ethylenediphosphinic acid salts of the type
A-P(O)(OX)-CR¹R²-CR³R⁴-P(O)(OX)-A
where A, R¹, R², R³, R⁴, R⁵ and R⁶ are as defined in claim 1 and X is an element of main group or transition group 2, an element of main or transition group 3, an element of main or transition group 4, an element of main or transition group 5, an element of transition group 6, an element of transition group 7, an element of transition group 8 and/or a nitrogen base, wherein ethylenebis(hydroxyalkylphosphinic acid) or ethylenediphosphinic acid of the type
A-P(O)(OX)-CR¹R²-CR³R⁴-P(O)(OX)-A
where A, R¹, R², R³, R⁴, R⁵ and R⁶ are as defined in claim 1 and X is an alkali metal, is reacted in a solvent system with a reactant II to form another metal salt (not an alkali metal salt).

6. The process as claimed in claim 5, wherein the reactant II is a borate, carbonate, hydroxocarbonate, hydroxocarbonate hydrate, mixed hydroxocarbonate, mixed hydroxocarbonate hydrate, phosphate, sulfate, sulfate hydrate, hydroxosulfate hydrate, mixed hydroxosulfate hydrate, oxysulfate, acetate, nitrate, fluoride, fluoride hydrate, chloride, chloride hydrate, oxychloride, bromide, iodide, iodide hydrate, carboxylic acid derivative and/or alkoxide.

7. The use of ethylenediphosphinic acids as claimed in claim 1 or 2 as flame retardants for clear coatings and intumescent coatings, flame retardants for wood and other cellulose-containing products, as reactive and/or nonreactive flame retardants for polymers, for producing flame-retarded polymer molding compositions, for producing flame-retardant polymer moldings and/or for the flame-resistant treatment of polyesters and cellulose pure and mixed woven fabrics by impregnation.

8. The use of ethylenediphosphinic acids as claimed in claim 1 or 2 as binders for foundry compositions, mold sands; as crosslinkers or accelerators in the curing of epoxy resins, polyurethanes and unsaturated polyester resins; as polymer stabilizers such as light stabilizers, free-radical scavengers and/or heat stabilizers for woven cotton fabrics, polymer fibers, plastics; as crop protection agents such as plant growth regulator, as herbicide, pesticide or fungicide; sequestering agents, in mineral oil recovery and in metal treatment agents; mineral oil additive; corrosion inhibitors in laundry detergent and cleaner applications; in electronics applications, as free-radical scavengers in photosensitive layers; as aldehyde scavengers; as formaldehyde scavengers in adhesives, moldings.

9. A flame-retarded thermoplastic polymer molding composition containing from 0.5 to 45% by weight of ethylenediphosphinic acid as claimed in claim 1 or 2 and from 0.5 to 99.5% by weight of thermoplastic polymer or mixtures thereof, with the sum of the components being 100% by weight.

10. A flame-retarded thermoset composition containing from 0.1 to 45% by weight of ethylenediphosphinic acid as claimed in claim 1 or 2, from 40 to 89.9% by weight of unsaturated polyesters and from 10 to 60% by weight of vinyl monomers, with the sum of the components being 100% by weight.

11. A flame-resistant epoxy resin containing from 0.5 to 50% by weight of ethylenediphosphinic acid as claimed in claim 1 or 2, from 5 to 99.5% by weight of an epoxy resin and from 0 to 20% by weight of a hardener, with the sum of the components being 100% by weight.

## Revendications

1. Acides éthylènediphosphiniques et leurs sels, de formule générale (I)
A-P(O)(OX)-CR¹R²-CR³R⁴-P(O)(OX)-A (I)
dans laquelle A représente CR⁵R⁶-OH,
R¹, R², R³, R⁴, R⁵, R⁶ sont identiques ou différents et représentent indépendamment les un des autres H, un groupe alkyle en C₁-C₂₀, aryle en C₆-C₂₀ et/ou aralkyle en C₆-C₂₀ et X représente H, un métal alcalin, un élément des groupes IIA et IIB, un élément des groupes IIIA et IIIB, un élément des groupes IVA et IVB, un élément des groupes VA et VB, un élément du groupe VIB, un élément du groupe VIIB, un élément du groupe VIIIB et/ou une base azotée.

2. Acides éthylènediphosphiniques et leurs sels selon la revendication 1, **caractérisés en ce que** R¹, R², R³, R⁴, R⁵, R⁶ sont identiques ou différents et représentent indépendamment les un des autres H, un groupe méthyle, éthyle, n-propyle, isopropyle, n-butyle, tert-butyle, n-pentyle et/ou phényle.

3. Procédé (1) pour la préparation d'acides éthylènediphosphiniques et de leurs sels, de formule générale (I)
A-P(O)(OX)-CR¹R²-CR³R⁴-P(O)(OX)-A (I)
dans laquelle A représente CR⁵R⁶-OH,
R¹, R², R³, R⁴, R⁵, R⁶ sont identiques ou différents et représentent indépendamment les un des autres H, un groupe alkyle en C₁-C₂₀, aryle en C₆-C₂₀ et/ou aralkyle en C₆-C₂₀ et X représente H, un métal alcalin, **caractérisé en ce que** qu'on fait réagir
a) un adduit d'acide monophosphinique de formule (II)
H-P(O)(OX)-A (II)
avec l'acétylène ou un composé contenant de l'acétylène et
b) en option on sépare d'avec des produits secondaires l'acide éthylènediphosphinique du type
A-P(O)(OX)-CR¹R²-CR³R⁴-P(O)(OX)-A.

4. Procédé (2) pour la préparation de sels d'acides éthylène-bis(hydroxyalkylphosphinique)s ou de sels d'acides éthylènediphosphiniques du type
A-P(O) (OX)-CR¹R²-CR³R⁴-P(O)(OX)-A
où A, R¹, R², R³, R⁴, R⁵ et R⁶ ont les mêmes significations que dans la revendication 1 et X représente un métal alcalin, un élément des groupes IIA et IIB, un élément des groupes IIIA et IIIB, un élément des groupes IVA et IVB, un élément des groupes VA et VB, un élément du groupe VIB, un élément du groupe VIIB, un élément du groupe VIIIB et/ou une base azotée, **caractérisé en ce qu'**on fait réagir un acide éthylène-bis(hydroxyalkylphosphinique) ou acide éthylènediphosphinique du type
A-P(O)(OX)-CR¹R²-CR³R⁴-P(O)(OX)-A
où A, R¹, R², R³, R⁴, R⁵ et R⁶ ont les mêmes significations que dans la revendication 1 et X représente H, dans un système de solvant, avec un partenaire réactionnel I qui consiste en un composé d'un métal alcalin, d'un élément des groupes IIA et IIB, d'un élément des groupes IIIA et IIIB, d'un élément des groupes IVA et IVB, d'un élément des groupes VA et VB, d'un élément du groupe VIB, d'un élément du groupe VIIB, d'un élément du groupe VIIIB et/ou en une base azotée.

5. Procédé (3) pour la préparation de sels d'acides éthylène-bis(hydroxyalkylphosphinique)s ou de sels d'acides éthylènediphosphiniques du type
A-P(O)(OX)-CR¹R²-CR³R⁴-P(O)(OX)-A
où A, R¹, R², R³, R⁴, R⁵ et R⁶ ont les mêmes significations que dans la revendication 1 et X représente un élément des groupes IIA et IIB, un élément des groupes IIIA et IIIB, un élément des groupes IVA et IVB, un élément des groupes VA et VB, un élément du groupe VIB, un élément du groupe VIIB, un élément du groupe VIIIB et/ou une base azotée, **caractérisé en ce qu'**on fait réagir un acide éthylène-bis(hydroxyalkylphosphinique) ou acide éthylènediphosphinique du type
A-P(O)(OX)-CR¹R²-CR³R⁴-P(O)(OX)-A
où A, R¹, R², R³, R⁴, R⁵ et R⁶ ont les mêmes significations que dans la revendication 1 et X représente un métal alcalin, dans un système de solvant, avec un partenaire réactionnel II, pour obtenir un autre sel métallique (sel non de métal alcalin).

6. Procédé selon la revendication 5, **caractérisé en ce que** le partenaire réactionnel consiste en des borates, carbonates, hydroxycarbonates, hydrates d'hydroxycarbonates, hydroxycarbonates mixtes, hydrates d'hydroxycarbonates mixtes, phosphates, sulfates, hydrates de sulfates, hydrates d'hydroxysulfates, hydrates d'hydroxysulfates mixtes, oxysulfates, acétates, nitrates, fluorures, hydrates de fluorures, chlorures, hydrates de chlorures, oxychlorures, bromures, iodures, hydrates d'iodures, dérivés d'acides carboxyliques et/ou alcoolates.

7. Utilisation d'acides éthylènediphosphiniques selon la revendication 1 ou 2, en tant qu'agent ignifuge, en particulier agent ignifuge pour vernis et revêtements intumescents, agent ignifuge pour bois et autres produits contenant de la cellulose, en tant qu'agent ignifuge réactif et/ou non réactif pour polymères, pour la production de matières à mouler polymères ignifugées, pour la production de corps moulés polymères ignifugés et/ou pour le traitement ignifugeant de tissus purs et mélangés de cellulose et polyester par imprégnation.

8. Utilisation d'acides éthylènediphosphiniques selon la revendication 1 ou 2, en tant que liants pour masses de fonderie, sables de fonderie ; en tant qu'agents de réticulation ou accélérateurs dans le durcissement de résines époxy, polyuréthanes et résines polyester insaturées ; en tant que stabilisants pour polymères, comme en tant que stabilisants photoprotecteurs, capteurs de radicaux et/ou stabilisants thermiques pour tissus de coton, fibres de polyester, matières plastiques ; en tant qu'agents phytosanitaires, comme en tant que régulateurs de croissance végétale, en tant qu'herbicide, pesticide ou fongicide ; séquestrant, dans l'extraction d'huile minérale et dans des produits de traitement de métaux, additif à des huiles minérales ; agents anticorrosion dans des applications de produits de lavage et de nettoyage ; dans des applications électroniques ; en tant que capteurs de radicaux dans des couches photosensibles ; en tant que capteurs d'aldéhyde ; en tant que capteurs de formaldéhyde dans des matières adhésives, corps moulés.

9. Matière à mouler polymère thermoplastique ignifugée contenant 0,5 à 45 % en poids d'acide éthylènediphosphinique selon la revendication 1 ou 2 et 0,5 à 99,5 % en poids de polymère thermoplastique ou de mélanges de tels polymères, la somme des composants étant égale à 100 % en poids.

10. Matière à mouler thermodurcissable ignifugée, contenant 0,1 à 45 % en poids d'acide éthylènediphosphinique selon la revendication 1 ou 2, 40 à 89,9 % en poids de polyesters insaturés et 10 à 60 % en poids de monomère vinylique, la somme des composants étant égale à 100 % en poids.

11. Résine époxy à traitement retardateur de combustion, contenant 0,5 à 50 % en poids d'acide éthylènediphosphinique selon au moins la revendication 1 ou 2, 5 à 99,5 % en poids d'une résine époxy et 0 à 20 % en poids d'un durcisseur, la somme des composants étant égale à 100 % en poids.
